# EUROPEAN PATENT SPECIFICATION

(11) **EP 4 273 830 B1**
(45) Date of publication and mention of the grant of the patent: **21.10.2026**
(21) Application number: 21913457.4
(22) Date of filing: 02.11.2021
(51) Int. Cl.: G08G 1/01, G08G 1/017, G01S 13/86

(54) **METHOD AND APPARATUS FOR MONITORING VEHICLE DRIVING INFORMATION**
VERFAHREN UND VORRICHTUNG ZUR ÜBERWACHUNG VON FAHRZEUGFAHRINFORMATIONEN
PROCÉDÉ ET APPAREIL DESTINÉS À CONTRÔLER DES INFORMATIONS DE CONDUITE DE VÉHICULE

(30) Priority: 29.12.2020 CN 202011592219
(43) Date of publication of application: 08.11.2023
(73) Proprietor: Hangzhou Hikvision Digital Technology Co., Ltd., Hangzhou, Zhejiang 310051 (CN)
(72) Inventor: GUO, Jiaqi, Hangzhou, Zhejiang 310051 (CN); DENG, Bangjun, Hangzhou, Zhejiang 310051 (CN); HE, Zuoqiang, Hangzhou, Zhejiang 310051 (CN); WANG, Xiaomin, Hangzhou, Zhejiang 310051 (CN)
(74) Representative: BRP Renaud & Partner mbB Rechtsanwälte Patentanwälte Steuerberater
(86) International application number: PCT/CN2021/128235
(87) International publication number: WO 2022/142713

(56) References cited:
- CN-A- 103 718 061
- CN-A- 108 919 256
- CN-A- 108 919 256
- CN-A- 110 515 073
- CN-A- 110 515 073
- CN-A- 110 532 896
- CN-A- 111 932 901
- CN-A- 111 983 603
- CN-A- 111 983 603
- CN-A- 112 071 083
- CN-A- 112 099 040
- CN-A- 112 700 647
- US-A1- 2014 063 263
- QIU HANG ET AL: "Kestrel: Video Analytics for Augmented Multi-Camera Vehicle Tracking", 2018 IEEE/ACM THIRD INTERNATIONAL CONFERENCE ON INTERNET-OF-THINGS DESIGN AND IMPLEMENTATION (IOTDI), IEEE, 17 April 2018 (2018-04-17), pages 48 - 59, XP033350837, DOI: 10.1109/IOTDI.2018.00015
- TIAN BIN ET AL: "Hierarchical and Networked Vehicle Surveillance in ITS: A Survey", IEEE TRANSACTIONS ON INTELLIGENT TRANSPORTATION SYSTEMS, IEEE, PISCATAWAY, NJ, USA, vol. 16, no. 2, 1 April 2015 (2015-04-01), pages 557 - 580, XP011576938, ISSN: 1524-9050, [retrieved on 20150327], DOI: 10.1109/TITS.2014.2340701

## Description

The present application claims the priority to a Chinese patent application No.202011592219.7 filed with the State Intellectual Property Office of People's Republic of China on December 29, 2020 and entitled "METHOD AND APPARATUS FOR MONITORING VEHICLE TRAVELING INFORMATION".

### Technical field

The embodiment of the present application relates to the field of intelligent traffic systems, in particular to a method and an apparatus for monitoring vehicle traveling information.

### Background

With the development of information technology, the demand for intelligent monitoring of the traveling process of vehicles is becoming increasingly strong. At present, due to the continuous growth of the number of the cars on hand, more and more people travel over long distances, and the road traffic situation is becoming increasingly complex, which results in that the relevant departments of road traffic management are facing increasing traffic pressure, especially the traffic pressure brought by the expressway to the relevant departments of road traffic management. As an inter-city rapid traffic corridor, the expressway has been plagued by frequent traffic jams and traffic accidents in recent years. Therefore, the relevant departments of road traffic management need to check the vehicle traveling information on the expressway frequently. How to accurately monitor the vehicle traveling information on expressway over long distances is a hot spot of current concern.

CN110532896A discloses a road vehicle detection method based on roadside millimeter wave radar and machine vision fusion, and belongs to the field of intelligent traffic vehicle-road coordination. Firstly, the fusion equipment composed of millimeter wave radar and vision sensor is calibrated to obtain the projection matrix. The vision sensor collects image information and outputs the pixel coordinates of the center point of the target vehicle and the category of the target vehicle; Millimeter wave radar filters the collected data by hand. Then the millimeter-wave radar detection target is transformed into the image coordinate system where the vision sensor is located through the projection matrix, and the observation value is matched with the image detection target. After the matching is successful, the information of the two target vehicles is detected and fused. Finally, according to the change of the median brightness of the image, the light condition of the actual environment department is judged and different target output strategies are switched.

CN111983603A provides a motion trajectory relay method, system, equipment, and central processing device, which are used for generating a complete motion trajectory of the same target within the continuous detection range of a plurality of video devices. The motion trajectory relay system comprises: a first radar video device used for detecting a target through a first camera and acquiring target image data of the target detected by the first camera, and detecting a target through a first radar and acquiring target radar data of the target detected by the first radar; a central processing equipment used for receiving the target image data and the target radar data sent by the first radar video device, extracting the target identification of the first target from the target image data when it is determined that the targets detected by the first camera and the first radar are the same first target according to the conversion relationship between the image coordinates detected by the first camera and the radar coordinates detected by the first radar, and generating the movement track information of the first target according to the target identification and the target radar data.

CN111932901A provides a road vehicle tracking detection device, method and storage medium. A plurality of acquisition devices are arranged to be able to acquire images of roads within a predetermined range. The image processing module is used for processing images collected by a plurality of acquisition devices at corresponding moments or corresponding time periods to determine vehicle detection results of vehicles in the images collected by the acquisition devices. The vehicle tracking management module is used for tracking and managing the vehicles in the detected roads within a predetermined range. The correlation degree calculation module is used to calculate the correlation degree between the vehicle detection results of different acquisition devices and the vehicle currently tracked by the vehicle tracking management module, and the vehicle tracking management module also determines the vehicle detection result matched with the currently tracked vehicle according to the correlation degree, and updates the state of the vehicle based on the vehicle detection result matched with the currently tracked vehicle company.

CN112099040A discloses a full continuous trajectory vehicle tracking system and method based on a laser radar network, wherein the system comprises a laser radar network, other roadside sensors, a roadside processor, a fusion server and network communication equipment. The method comprises the following steps: synchronizing time; scanning monitoring range; multi-target detecting vehicle; trajectory tracking; snapping and recognizing license plate; analyzing event; transforming coordinates; information coding: reporting the information by monitoring point; fusing full information; displaying the whole track of the vehicle.

CN110515073A provides a multi-radar cross regional network method and device for multi target tracking and recognition, which relates to the field of vehicle road detection, and comprises a plurality of radars and video detection systems arranged on an expressway, wherein when the target enters the trigger position set by the radar, the video detection data is triggered, and the radar data is associated with the video data, so that the characteristic information such as the license plate and vehicle type of the target vehicle and the motion information such as the vehicle speed can be synthesized on the expressway, and then the target is fused by the multi-radar data to form the running track of the tracking target driving across regions at high speed. US2014/063263A1 discloses a spatio-temporal object tracking system for identifying object across multiple camera views, has local timing module to measure object time data in one view, and global timing module to measure object time data through several views.

### Summary

The embodiments of the present application provide a method, an apparatus for monitoring vehicle traveling information, a storage medium and a computer program product, which can improve the accuracy of long-distance monitoring of vehicle traveling information.

The invention is set out in the appended set of claims.

The technical solution provided by the embodiment of the present application at least has the following beneficial effects.

In the embodiment of the present application, since a plurality of radar video devices on the traveling road can be used for monitoring the traveling information of the vehicle in relays, after acquiring the vehicle monitoring information by the plurality of radar video devices, the complete traveling information of the vehicle on the traveling road can be determined to be obtained. That is, through monitoring the vehicle by means of the plurality of radar video devices in relays, the complete traveling information of the vehicle on the traveling road can be obtained, so that long-distance vehicle traveling information can be intelligently obtained. In addition, since the radar function and the image acquisition function are integrated in the radar video device deployed on the road, by combining the radar function and the image acquisition function, not only can the monitoring range be expanded, but also the accuracy of the monitoring vehicle information can be improved under the influence of environmental factors such as weather, lighting and erection angle. Therefore, the method provided by the embodiment of the present application can improve the accuracy, real-time and comprehensiveness of the monitoring vehicle information.

### Brief Description of the Drawings

In order to explain the technical solution in the embodiments of the present application more clearly, a brief introduction will be given to the drawings required in the description of the embodiments. Obviously, the drawings in the following description are only some embodiments of the present application.
Fig. 1 is a schematic diagram of a structure of a system for monitoring vehicle traveling information provided by an embodiment of the present application;
Fig. 2 is a flowchart of a method for monitoring vehicle traveling information provided by an embodiment of the present application;
Fig. 3 is a flowchart of a method for monitoring vehicle traveling information provided by an embodiment of the present application;
Fig. 4 is a schematic diagram of a structure of an apparatus for monitoring vehicle traveling information provided by an embodiment of the present application;
Fig. 5 is a schematic diagram of a structure of an electronic device provided by an embodiment of the present application.

### Detailed Description

In order to clarify the purpose, technical solution and advantages of the embodiment of the present application, the embodiment of the present application will be further described in detail with the drawings.

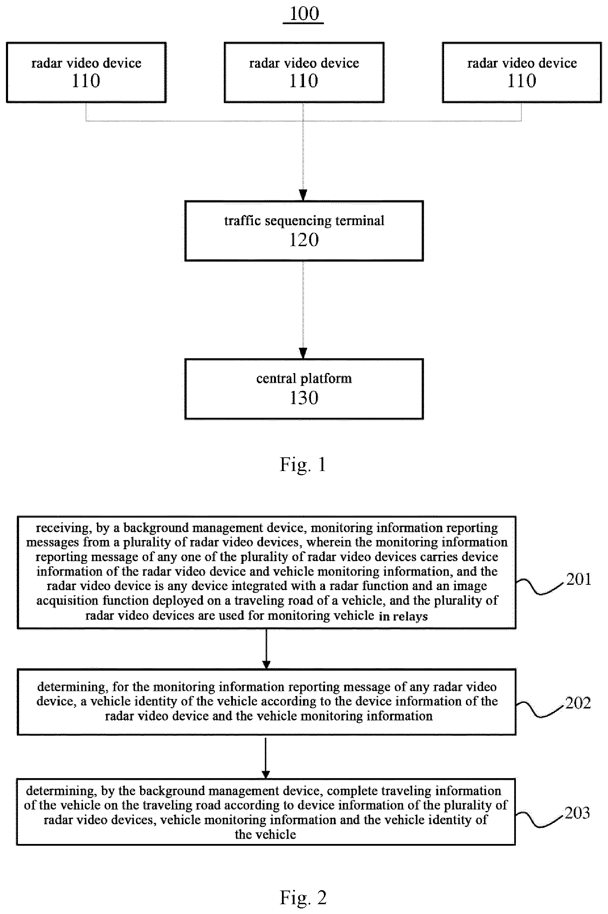

Fig. 1 is a schematic diagram of a structure of a system for monitoring vehicle traveling information provided by an embodiment of the present application. Referring to Fig. 1, the system 100 includes a plurality of radar video devices 110, a traffic sequencing terminal 120 and a central platform 130. The plurality of radar video devices 110 are sequentially erected beside the traveling road. The plurality of radar video devices 110 are connected with the traffic sequencing terminal 120 in a wired or wireless way for communication. The traffic sequencing terminal 120 is connected with the central platform 130 in a wired or wireless way for communication.

The radar video device 110 is used for monitoring in relays of the relevant information of the vehicle, that is, determining in relays the vehicle monitoring information. In some embodiments, the vehicle monitoring information includes the license plate number of the vehicle, a monitoring time and vehicle traveling information. A radar function and an image acquisition function are integrated in the radar video device 110. Wherein, the radar function is used to determine vehicle traveling information such as vehicle traveling track, and the image acquisition function is used to determine vehicle information such as the license plate number of the vehicle. After the radar video device 110 determines that the vehicle monitoring information is obtained, a monitoring information reporting message is generated, which carries the device information of the radar video device and the vehicle monitoring information, and is sent to the traffic sequencing terminal 120. The device information of the radar video device will be explained in detail in the following, and will not be elaborated here.

The traffic sequencing terminal 120 is used to receive the monitoring information reporting message sent by the radar video device 110, and determine the vehicle identity of the vehicle according to the device information of the radar video device 110 and the vehicle monitoring information carried in the monitoring information reporting message. The vehicle identity is used to uniquely identify a vehicle passing through the traveling road. After that, the traffic sequencing terminal 120 sends the device information, the vehicle monitoring information carried in the monitoring information reporting message and the determined vehicle identity to the central platform 130.

The central platform 130 is used to receive the device information, the vehicle monitoring information and the vehicle identity sent by the traffic sequencing terminal 120, and form complete traveling information of the vehicle on the traveling road according to the received device information, vehicle monitoring information and vehicle identity, so as to obtain long-distance vehicle traveling information.

It is worth noting that, in some embodiments, based on the above-mentioned description, the system 100 includes a plurality of radar video devices 110, a traffic sequencing terminal 120 and a central platform 130. However, in other embodiments, the system 100 includes a plurality of radar video devices 110 and a traffic sequencing terminal 120. Alternatively, the system 100 includes a plurality of radar video devices 110 and a central platform 130. That is, the system 100 includes at least one of the traffic sequencing terminal 120 and the central platform 130.

If the system 100 includes the traffic sequencing terminal 120 and does not include the central platform 130, that is, the system 100 includes a plurality of radar video devices 110 and the traffic sequencing terminal 120. In this case, the traffic sequencing terminal 120 can not only determine the vehicle identity of the vehicle, but also form the complete traveling information of the vehicle on the traveling road according to the device information, vehicle monitoring information carried in the monitoring information reporting message and vehicle identity, so as to obtain the long-distance vehicle traveling information. That is, the function of the center platform 130 mentioned above is integrated into the traffic sequencing terminal 120.

If the system 100 includes the central platform 130 and does not include the traffic sequencing terminal 120, that is, the system 100 includes a plurality of radar video devices 110 and the central platform 130. In this case, the center platform 130 can determine the vehicle identity of the vehicle according to the device information and vehicle monitoring information carried in the monitoring information reporting message, and can also form the complete traveling information of the vehicle on the traveling road according to the device information, vehicle monitoring information carried in the monitoring information reporting message and vehicle identity, so as to obtain the long-distance vehicle traveling information. That is, the function of the traffic sequencing terminal 120 mentioned above is integrated into the central platform 130.

It should be noted that the function of the traffic sequencing terminal 120 and the function of the central platform 130 are similar, however, for the convenience of management, when the system 100 includes the traffic sequencing terminal 120 and the central platform 130, the traffic sequencing terminal 120 is connected with a plurality of radar video devices 110 to acquire the monitoring information reporting messages of the plurality of radar video devices 110. The central platform 130 is only connected with the traffic sequencing terminal 120 to acquire relevant information from the traffic sequencing terminal 120, and there is no need to manage a plurality of radar video devices 110. The traffic sequencing terminal 120 and the central platform 130 both are any electronic product, for example, PC (personal computer), smart phone, PDA (personal digital assistant), PPC (Pocket PC), tablet computer, etc.

In addition, after a plurality of radar video devices 110 are deployed beside the traveling road, monitoring logical links of the plurality of radar video devices 110 can be stored in the traffic sequencing terminal 120 and the central platform 130. The monitoring logical link refers to a link composed of a plurality of radar video devices on the traveling road for monitoring the traveling information of vehicle. In order to facilitate the subsequent explanation, the configuration process of the monitoring logical link is explained in detail here.

It should be noted that the configuration of the monitoring logical link can be realized by a user through the central platform 130, or can be realized by the user remotely accessing a built-in web of the traffic sequencing terminal 120 through other devices, which is not limited by the embodiment of the present application. The following is an example of how a user configures the monitoring logical link through the central platform 130. Next, the implementation process of determining the monitoring logical link by the central platform 130 is introduced through the following steps:
Step 1: determining, by the central platform 130, a plurality of radar video devices 110 for monitoring the traveling information of the vehicle from radar video devices 110 deployed on a traveling road.

In one possible implementation, the central platform 130 displays a device selection interface, which includes the device information of each of the radar video devices 110 deployed in a certain region, the device information including the deployment location of the radar video device. The user can determine a plurality of radar video devices deployed on the same traveling road according to the deployment location of respective radar video device displayed on the central platform 130, and then make a selection in the device selection interface. In this way, when the central platform 130 detects a selection operation, the central platform 130 determines a plurality of radar video devices selected by the selection operation as the plurality of radar video devices for monitoring the traveling information of vehicle appearing on the traveling road.

For example, for a section of expressway including a plurality of entrances and exits, the center platform 130 displays the device selection interface, which includes the deployment location of each of the radar video devices deployed on the expressway. Suppose that the user selects a plurality of radar video devices 110 deployed between an exit and an entrance of the expressway based on the deployment location of each of the radar video devices displayed on the device selection interface, the plurality of radar video devices 110 deployed between the exit and the entrance of the expressway are regarded as the plurality of radar video devices 110 for monitoring the traveling information of vehicle appearing on the road between the exit and the entrance.

In addition to the deployment location, the above-mentioned device information of the radar video device can also include other information, such as device identity, device name and so on, which is not specifically limited in the embodiment of the present application.

In addition, the way of determining the plurality of radar video devices for monitoring the traveling information of vehicle is not limited to the above-mentioned way, and is not specifically limited in the embodiment of the present application.

Step 2: configuring, by the central platform 130, the monitoring sequence of the plurality of radar video devices to determine the monitoring logical link.

In one possible implementation, the central platform 130 displays a sequence configuration interface, which includes device identities of the plurality of radar video devices 110. The central platform 130 acquires the relaying parameters of the plurality of radar video devices 110 based on the device identity of respective radar video device displayed on the sequence configuration interface. The specific process is as follows: displaying the device identities of the plurality of radar video devices in the sequence configuration interface, and when the central platform detects a selection operation for the device identity of any radar video device, acquiring the relaying parameter corresponding to the device identity input by the user through the preset operation. For example, when the user selects one of the device identities, an input window is displayed on the sequence configuration interface, and the user may input relaying parameter corresponding to the device identity via the input window.

The relaying parameter of any radar video device is used to indicate the relay state of the radar video device in the plurality of radar video devices for monitoring the vehicle in relays. Therefore, the central platform 130 may determine the monitoring sequence of the plurality of radar video devices 110 based on the relaying parameters of the plurality of radar video devices 110, so as to obtain the monitoring logical link.

That is, after the central platform 130 displays the sequence configuration interface, the user can set the relaying parameters of the plurality of radar video devices 110 via the sequence configuration interface. After the user sets the relaying parameters of the plurality of radar video devices 110 via the sequence configuration interface, the central platform 130 can simultaneously determine the monitoring sequence of the plurality of radar video devices 110 based on a sequence of the set relaying parameters of the plurality of radar video devices 110, and obtain the monitoring logical link.

As an example, after the central platform 130 acquires the relaying parameter of each of the plurality of radar video devices based on the sequence configuration interface, according to the relay states of the radar video devices indicated by the relaying parameters of the plurality of radar video devices, the device identities of the plurality of radar video devices are sequenced in the sequence of monitoring in relays, and the sequenced device identities of respective radar video devices are taken as a monitoring logical link. That is, the monitoring logical link is composed of the device identities of the plurality of radar video devices.

The device identity of the radar video device may be the unique identity code or IP address of the radar video device. Since the unique identity code of the radar video device will not change over time, when the monitoring logical link is composed of unique identity codes of the plurality of radar video devices, the monitoring logical link will not change over time.

However, the IP address of the radar video device will change over time, thus when the monitoring logical link is composed of IP addresses of the plurality of radar video devices, the monitoring logical link will change over time. Therefore, in this case, in order to determine accurate monitoring logical links at different times, the central platform 130 needs to send the relaying parameter of each of the radar video devices to the corresponding radar video device after acquiring the relaying parameter of each of the radar video devices. In this way, the central platform 130 or the traffic sequencing terminal 120 can subsequently acquire the IP addresses and relaying parameters of the radar video devices from the plurality of radar video devices respectively, and then re-sequence the IP addresses of the plurality of radar video devices according to the sequence of the relaying parameters acquired from the plurality of radar video devices, so as to re-obtain the monitoring logical link.

That is, when the device identity of the radar video device will not change over time, the monitoring logical link will not change over time. In this case, after the user configures the relaying parameters of the plurality of radar video devices via the central platform 130, the central platform 130 can directly determine the monitoring logical link through the configured relaying parameters, and the radar video device does not need to know its own relaying parameter. However, when the device identity of the radar video device changes over time, after the user configures the relaying parameters of the plurality of radar video devices via the central platform 130, the central platform 130 can determine the monitoring logical link through the configured relaying parameters. At the same time, the central platform 130 needs to send the relaying parameters of the plurality of radar video devices to the corresponding radar video devices, and then, the central platform 130 or the traffic sequencing terminal 120 can update the determined monitoring logical link according to the relaying parameters stored by the plurality of radar video devices. Wherein, the central platform 130 sends the relaying parameters of the plurality of radar video devices to the corresponding radar video devices, which specifically means that the central platform 130 sends the relaying parameters of the plurality of radar video devices to the corresponding radar video devices through the traffic sequencing terminal 120.

The above-mentioned relaying parameter of the radar video device is explained below.

In one possible implementation, the relaying parameter is used to indicate the sequence of the radar video device in the monitoring logical link. For example, for the first one in the radar video devices in the monitoring logical link, the relaying parameter of the radar video device is parameter 1, for the second radar video device in the monitoring logical link, the relaying parameter of the radar video device is parameter 2, and so on, and for the Nth radar video device in the monitoring logical link, the relaying parameter of the radar video device is parameter N. In some embodiments, the relaying parameter can also be used to indicate whether the radar video device is the first one in the radar video devices or the non-first one in the radar video devices in the monitoring logical link, the non-first one in the radar video devices being also known as a relaying device.

For the case that the device identity of the radar video device changes over time, the relaying parameter of the radar video device are sent to the radar video device, in this way, when the device identity of the radar video device changes, the central platform 130 does not need to re-configure the relaying parameter for each of the radar video devices, but directly acquires corresponding relaying parameters from the radar video devices, and then re-determines the monitoring logical link, which can improve the efficiency of determining the monitoring logical link.

In another possible implementation, for the first radar video device of the plurality of radar video devices, the relaying parameter of the first radar video device indicate the device information of other radar video device that continue to monitor in relays after the first radar video device. For example, on the road where a vehicle is traveling, when the vehicle travels out of a monitoring range of a first radar video device, the vehicle will enter a monitoring range of a second radar video device, that is, the second radar video device is a relaying radar video device of the first radar video device. At this time, the relaying parameter of the first radar video device may be a device identity of the second radar video device. In this scenario, the central platform 130 may determine the monitoring sequence of the plurality of radar video devices based on the device identities of respective radar video devices and the relaying parameters of respective radar video devices, so as to obtain the monitoring logical link.

For example, the IP address of the radar video device is selected as the device identity of the radar video device, the central platform 130 acquires, based on the sequence configuration interface, the IP address of each of the radar video devices and the IP address of the relaying radar video device of each of the radar video devices among the plurality of radar video devices, and connects the IP addresses of the plurality of radar video devices based on the IP address of the relaying radar video device of each of the radar video devices to obtain a monitoring logical link.

It should be noted that the above-mentioned process is only several possible implementations to determine the monitoring logical link. Optionally, in another possible implementation, the monitoring logical link can also be determined through the configuration interface of the radar video device. That is to say, after each of the radar video devices displays a configuration interface, the user sets the relaying parameter of the radar video device in the configuration interface displayed on respective radar video device, and the radar video device stores its own relaying parameter. In this way, the central platform 130 acquires the device identity and relaying parameter of each of the radar video devices from the plurality of radar video devices, and sequences the device identities of the plurality of radar video devices according to the relaying parameters to obtain a monitoring logical link. In this case, it is not necessary to distinguish whether the device identity of the radar video device will change over time or not.

In addition, after the central platform 130 determines the monitoring logical link, the central platform 130 not only stores the monitoring logical link, but also sends the monitoring logical link to the traffic sequencing terminal 120, which stores the monitoring logical link. Moreover, in the case that the device identity of the radar video device changes over time, the central platform 130 needs to synchronize the updated monitoring logical link to the traffic sequencing terminal 120 every time the monitoring logical link is updated, so as to ensure that the monitoring logical link stored in the traffic sequencing terminal 120 can be updated in time.

In another possible implementation, if the central platform 130 does not display a sequence configuration interface, it is possible to remotely access a web built in the traffic sequencing terminal 120 through other devices to form the monitoring logical link. Specifically, after remotely accessing the web built in the traffic sequencing terminal 120 through other devices, the device identities of a plurality of radar video devices for monitoring the traveling information of vehicle appearing on the traveling road are displayed on a display interface of other devices, and then other devices can configure relaying parameters corresponding to respective device identities based on the displayed device identities, so as to determine the monitoring logical link based on the relaying parameters corresponding to respective device identities. Wherein, the implementation that other devices configure the relaying parameters corresponding to respective device identities based on the displayed device identities, can refer to the above-mentioned implementation process that the central platform configures the relaying parameters corresponding to respective device identities based on the device identities displayed on the sequence configuration interface, which is not repeated here.

Based on the above-mentioned description of the system architecture, the traffic sequencing terminal and the central platform can exist independently, alternatively, the functions of the traffic sequencing terminal can be integrated into the central platform, or the functions of the central platform can be integrated into the traffic sequencing terminal. In order to facilitate understanding, two embodiments will be provided in the following for a detailed explanation of the methods provided in the embodiments of the present application.

Fig. 2 is a flowchart of a method for monitoring vehicle traveling information provided by an embodiment of the present application. In the present application, the system includes a plurality of radar video devices and a background management device (also called an apparatus for monitoring vehicle traveling information), and the background management device is a central platform integrated with the function of a traffic sequencing terminal, alternatively, a traffic sequencing terminal integrated with the function of a central platform. As shown in Fig. 2, the method for monitoring vehicle traveling information includes the following steps:
Step 201: receiving, by a background management device, monitoring information reporting messages from a plurality of radar video devices, wherein the monitoring information reporting message of any one of the plurality of radar video devices carries device information of the radar video device and vehicle monitoring information monitored by the radar video device, and the radar video device is any device integrated with a radar function and an image acquisition function deployed on a traveling road of a vehicle, and the plurality of radar video devices are used for monitoring vehicle in relays.

Since the camera is easily influenced by environmental factors such as weather, lighting and erection angle, the detection range, accuracy and real-time of the camera are limited, resulting in inaccurate vehicle traveling information, such as vehicle traveling track and so on, monitored by the camera. Therefore, in the embodiment of the present application, a plurality of radar video devices used for monitoring vehicle traveling information not only possess the image acquisition function, but also are integrated with the radar function. Radar monitoring is not affected by environmental factors such as angle and weather, thus monitoring vehicle traveling information by using radar has the characteristics of wide detection range and high accuracy. However, radar monitoring cannot identify vehicle information such as the license plate number of the vehicle, thus image acquisition function is needed to determine vehicle information such as the license plate number of the vehicle. Therefore, in the embodiment of the present application, the vehicle traveling information is monitored by the radar video device integrated with the radar function and the image acquisition function, which improves the accuracy, real-time and comprehensiveness of the monitoring.

It should be noted that the vehicle traveling information determined by the radar function includes, but is not limited to, the vehicle traveling track, and may also include information such as the vehicle traveling speed and the vehicle traveling direction, which is not specifically limited in the embodiment of the present application. Similarly, the vehicle information determined by the image acquisition function includes, but is not limited to, the license plate number, and may also include vehicle information such as vehicle model information, which is not specifically limited in the embodiment of the present application.

A monitoring range of a radar video device is limited. In order to achieve long-distance monitoring, it is necessary to monitor the vehicle in relays through a plurality of radar video devices on the traveling road of the vehicle. In the embodiment of the present application, the first radar video device is taken as an example, and the first radar video device is any one of the plurality of radar video devices for monitoring the vehicle in relays. When the vehicle enters the monitoring range of the first radar video device, the image acquisition function of the first radar video device photographs the vehicle and then identifies the license plate number and other information in the photographed image. At the same time, the radar function of the first radar video device monitors the traveling track, average traveling speed and traveling direction of the vehicle. A monitoring information reporting message is sent to a background management device after the first radar video device finishes monitoring the vehicle, wherein the monitoring information reporting message carries the device information of the first radar video device and the vehicle monitoring information monitored by the first radar video device.

In some embodiments, the device information of the first radar video device includes a device identity of the first radar video device. The device identity of the first radar video device is used to uniquely identify the first radar video device. Optionally, the device identity of the first radar video device is the unique identity code of the first radar video device, or the IP (Internet Protocol) address of the first radar video device. In other embodiments, the device information of the first radar video device includes the device identity and relaying parameter of the first radar video device. The relaying parameter of the radar video device may indicate the monitoring sequence of the radar video device in the plurality of radar video devices for monitoring the vehicle in relays.

The vehicle monitoring information includes the information determined by the first radar video device through the image acquisition function and also includes the information determined through the radar function. In some embodiments, the vehicle monitoring information includes a license plate number and vehicle traveling information. In other embodiments, the vehicle monitoring information includes the license plate number of the vehicle, a monitoring time and the vehicle traveling information.

Optionally, the monitoring time includes time when the first radar video device monitors the vehicle at the first time, or time when the first radar video device monitors the vehicle at the last time, that is, the monitoring time includes time when the vehicle enters the monitoring range of the first radar video device, or includes time when the vehicle leaves the monitoring range of the first radar video device, which is not specifically limited in the embodiment of the present application. The vehicle traveling information includes the vehicle traveling track, and also may include the average traveling speed of the vehicle, the traveling direction of the vehicle and so on.

Step 202: for the monitoring information reporting message of any radar video device, determining the vehicle identity of the vehicle according to the device information of the radar video device and the vehicle monitoring information monitored by the radar video device.

Step 202 will be described in details below by taking the first radar video device as an example. The first radar video device is any one of the plurality of radar video devices for monitoring the vehicle in relays.

The monitoring logical link may or may not be stored in the background management device, thus step 202 will be described in the following two cases.

In the first case, a monitoring logical link is stored in the background management device.

The device information of the first radar video device includes the device identity of the first radar video device. Therefore, the implementation of step 202 is that: determining the vehicle identity according to the device identity of the first radar video device, the vehicle monitoring information monitored by the first radar video device and the stored monitoring logical link. Wherein, the monitoring logical link refers to a link composed of the plurality of radar video devices for monitoring the traveling information of vehicle.

Based on the description of the forming process of the monitoring logical link in the aforementioned system architecture, the monitoring logical link may be a link composed of device identities of the plurality of radar video devices for monitoring vehicle in relays. In this way, after storing the monitoring logical link in the background management device, the sequence of the radar video device can be determined only according to the device identity of the radar video device. It is not necessary to determine the sequence of the radar video device according to the device identity and relaying parameter, thus being more convenient and faster.

For the plurality of devices for monitoring the vehicle in relays, when the same vehicle enters the monitoring range of a first one in the radar video devices for monitoring vehicle in relays, the background management device will generate and store a vehicle identity corresponding to the vehicle based on the relevant information of the first one in the radar video devices and the relevant information of the vehicle. In this way, when the vehicle enters the monitoring range of the subsequent one in the radar video devices for monitoring vehicle in relays, the background management device may directly acquire the stored vehicle identity without generating the vehicle identity of the vehicle again.

Based on the above-mentioned configuration, the implementation process of determining the vehicle identity according to the device identity of the first radar video device, the vehicle monitoring information monitored by the first radar video device and the stored monitoring logical link may include the following steps: step a, determining whether the first radar video device is the first one in the radar video devices or the non-first one in the radar video devices according to the device identity of the first radar video device and the stored monitoring logical link; step b, if the first radar video device is the first one in the radar video devices for monitoring the vehicle in relays, generating a vehicle identity according to the vehicle monitoring information monitored by the first radar video device; step c, if the first radar video device is the non-first one in the radar video devices for monitoring the vehicle in relays, querying the vehicle identity according to the vehicle monitoring information monitored by the first radar video device.

It should be noted that, in the case that the monitoring logical link is stored, "the first one in the radar video devices for monitoring the vehicle in relays" is equivalent to "the first one in the radar video devices on the monitoring logical link", and "the non-first one in the radar video devices for monitoring the vehicle in relays" is equivalent to "the non-first one in the radar video devices on the monitoring logical link".

The monitoring logical link is formed by sequencing the device identities of the plurality of radar video devices. Therefore, a background management device matches the device identity of the first radar video device with the monitoring logical link, and if the device identity of the first radar video device is determined to be the first one in the device identities on the monitoring logical link by matching, the first radar video device is determined to be the first one in the radar video devices for monitoring the vehicle in relays. If the device identity of the first radar video device is determined to be the non-first one in the device identities on the monitoring logical link by matching, the first radar video device is determined to be the non-first one in the radar video device for monitoring the vehicle in relays.

In the following, the above-mentioned steps b and c will be described in detail in two scenarios.

Scenario 1: vehicle monitoring information includes license plate number.

At this time, if the first radar video device is the first one in the radar video devices for monitoring vehicle in relays, an implementation process of generating the vehicle identity according to the vehicle monitoring information is as follows: generating a vehicle identity of the vehicle according to the license plate number, and storing the license plate number and the vehicle identity in target correspondence, which indicates correspondence between the license plate number and the vehicle identity. In this scenario, if the first radar video device is the non-first one in the radar video devices for monitoring the vehicle in relays, an implementation process of querying the vehicle identity according to the vehicle monitoring information is as follows: according to the license plate number in the vehicle monitoring information, searching a vehicle identity corresponding to the license plate number from the target correspondence to obtain the vehicle identity of the vehicle.

In the case that the first radar video device is the first one in the radar video devices for monitoring the vehicle in relays, there are many ways to generate the vehicle identity according to a license plate number. In one possible implementation, directly hash mapping is carried out on the license plate number, and the mapped hash value is taken as the vehicle identity of the vehicle. Of course, the vehicle identity can also be generated in other ways, which is not specifically limited by the embodiment of the present application.

In addition, there are many entrances and intersections on the traveling road of the vehicle, so there may be a plurality of monitoring logical links. And the plurality of monitoring logical links may be stored in the background management device. At this time, in order to distinguish which of the plurality of monitoring logical links the vehicle is currently on, the device identity of the first one in the radar video devices, and/or the monitoring logical link identity, may be stored in the target correspondence, so as to distinguish different monitoring logical links. Therefore, there are two implementations to achieve the above-mentioned determination of vehicle identity.

In one possible implementation, if the first radar video device is the first one in the radar video devices for monitoring the vehicle in relays, the vehicle identity of the vehicle is generated according to the license plate number of the vehicle, and then the background management device adds the device identity of the first radar video device, the vehicle identity and the license plate number to the first target correspondence. The first target correspondence indicates correspondence among the device identity, the license plate number and the vehicle identity. At this time, if the first radar video device is the non-first one in the radar video devices for monitoring the vehicle in relays, an implementation process of querying the vehicle identity according to the vehicle monitoring information is as follows: according to the device identity of the first radar video device, determining the first one in the radar video devices for monitoring the vehicle in relays through the monitoring logical link, and according to the device identity and the license plate number of the first one in the radar video devices, acquiring the vehicle identity of the vehicle from the first target correspondence.

In another possible implementation, if the first radar video device is the first one in the radar video devices for monitoring the vehicle in relays, the vehicle identity of the vehicle is generated according to the license plate number of the vehicle, and then the monitoring logical link identity corresponding to the first radar video device, the vehicle identity and the license plate number of the vehicle are added to a second target correspondence, which indicates correspondence among the monitoring logical link identity, the license plate number and the vehicle identity. At this time, if the first radar video device is the non-first one in the radar video devices for monitoring the vehicle in relays, an implementation process of querying the vehicle identity according to the vehicle monitoring information is as follows: according to the device identity of the first radar video device, determining the monitoring logical link identity corresponding to the first radar video device, and according to the monitoring logical link identity corresponding to the first radar video device and the license plate number, acquiring the vehicle identity of the vehicle from the second target correspondence.

It should be noted that the device identity of the first radar video device is one of the device information of the first radar video device, therefore, the background management device may not only add the device identity of the first radar video device, vehicle identity and license plate number to the first target correspondence. Of course, the background management device may also add the device information of the first radar video device, vehicle identity and license plate number to the first target correspondence.

Similarly, the background management device may also, according to the device information of the first radar video device, determine the device information of the first one in the radar video devices on the monitoring logical link through the monitoring logical link, and then, according to the device information of the first one in the radar video devices and the license plate number, acquire the vehicle identity of the vehicle from the first target correspondence. Alternatively, the background management device determines the monitoring logical link identity corresponding to the first radar video device according to the device information of the first radar video device, and then acquires the vehicle identity of the vehicle from the second target correspondence according to the monitoring logical link identity corresponding to the first radar video device and the license plate number.

In addition, a vehicle may pass through a traveling road corresponding to the same monitoring logical link for many times in a short period of time. In order to distinguish a same vehicle that passing through the traveling road corresponding to the same monitoring logical link for many times, in one possible implementation, each vehicle identity in the target correspondence also corresponds to marking information, and the marking information is the first marking information or the second marking information. Wherein, the first marking information indicates that the corresponding vehicle identity is the vehicle identity corresponding to each of the radar video devices which has been determined respectively for the monitoring information reporting messages of a plurality of radar video devices, alternatively, the first marking information indicates that the vehicle has passed all the radar video devices on the monitoring logical link, and the second marking information indicates that there are also corresponding vehicle identities which are not determined for the monitoring information reporting messages of at least one radar video device of the plurality of radar video devices, alternatively, the second marking information indicates that the vehicle has not passed all the radar video devices on the monitoring logical link. The first marking information indicates that "corresponding vehicle identity" in the corresponding vehicle identity refers to the vehicle identity corresponding to the first marking information.

That is to say, after a certain vehicle enters the monitoring range corresponding to the monitoring logical link, if the background management device receives the monitoring information reporting messages of all the radar video devices in the monitoring logical link and has determined the respective vehicle identities corresponding to all the radar video devices in the monitoring logical link based on the monitoring information reporting messages of all the radar video devices in the monitoring logical link, the vehicle identity is marked in the target correspondence, and the marking information is the first marking information. If the background management device does not receive the monitoring information reporting messages of all the radar video devices in the monitoring logical link, or does not determine the respective vehicle identities corresponding to all the radar video devices in the monitoring logical link, the vehicle identity in the target correspondence is marked, and the marking information is the second marking information.

For example, for any vehicle, after determining the respective vehicle identities corresponding to all the radar video devices in the monitoring logical link, the background management device may obtain the complete vehicle traveling information of the vehicle based on the respective vehicle identities corresponding to all the radar video devices and the respective vehicle monitoring information reported by all the radar video devices. Therefore, if the background management device has not received the monitoring information reporting messages of all the radar video devices in the monitoring logical link, or has not determined the respective vehicle identities corresponding to all the radar video devices in the monitoring logical link, it indicates that complete traveling information of the vehicle has not been obtained at this time. In other words, if marking information corresponding to certain vehicle identity in the target correspondence is the second marking information, it indicates that complete traveling information corresponding to the vehicle identity has not been formed; if marking information corresponding to certain vehicle identity in the target correspondence is the first marking information, it indicates that the vehicle has passed all the radar video devices for monitoring the vehicle in relays, at this time, there is no radar video device that has not reported the traveling information related to the vehicle.

Therefore, in one possible implementation, after the vehicle starts to enter the monitoring range of the monitoring logical link, when the vehicle identity of the vehicle is stored in the target correspondence, the marking information of the vehicle identity is marked as the second marking information. After the vehicle identity corresponding to each radar video device has been determined for the monitoring information reporting messages of a plurality of radar video devices, alternatively, after the complete vehicle traveling information of the vehicle is determined, the marking information corresponding to the vehicle identity in the target correspondence is changed to the first marking information.

For another example, for any vehicle, after determining the respective vehicle identities corresponding to all the radar video devices in the monitoring logical link, the background management device reports the vehicle identity and the monitoring information reporting messages of all the radar video devices to other devices, to facilitate other devices to determine the complete traveling information of the vehicle. Therefore, if the background management device has not received the monitoring information reporting messages of all the radar video devices in the monitoring logical link, or has not determined the respective vehicle identities corresponding to all the radar video devices in the monitoring logical link, it indicates that the vehicle identity and the monitoring information reporting messages of all the devices have not been reported at this time. In other words, if the marking information corresponding to the certain vehicle identity in the target correspondence is the second marking information, it indicates that the background management device has not reported the vehicle identity and the monitoring information reporting messages of all the radar video devices. If the marking information corresponding to the certain vehicle identity in the target correspondence is the first marking information, it indicates that the vehicle has passed all the radar video devices for monitoring the vehicle in relays, and at this time, there is no radar video device that has not formed a monitoring information reporting message of the vehicle.

Therefore, in a possible implementation, after the vehicle starts to enter the monitoring range of the monitoring logical link, when the vehicle identity of the vehicle is stored in the target correspondence, the marking information of the vehicle identity is firstly marked as the second marking information. After the background management device has reported the vehicle identity and the monitoring information reporting messages of all the radar video devices to other devices subsequently, alternatively, after the background management device receives the complete traveling information confirmation instruction returned by other devices, the marking information corresponding to the vehicle identity in the target correspondence is changed to the first marking information. The complete traveling information confirmation instruction indicates that other devices have determined the complete traveling information of the vehicle.

In addition, in the case that the vehicle identity in the target correspondence corresponds to the above-mentioned marking information, if there are the plurality of the monitoring logical links, when the vehicle passes through the monitoring range of all the radar video devices on a certain monitoring logical link, the marking information corresponding to the vehicle identity of the vehicle on this monitoring logical link in the target correspondence is the first marking information. When the vehicle has not passed through the monitoring range of all the radar video devices on a certain monitoring logical link, the marking information corresponding to the vehicle identity of the vehicle on this monitoring logical link in the target correspondence is the second marking information. Therefore, the aforementioned marking information corresponding to the vehicle identity may also be used to distinguish the monitoring logical link corresponding to the road where the vehicle is currently traveling. In this scenario, if the current first radar video device is the non-first one in the radar video devices for monitoring the vehicle in relays, the background management device only needs to search a vehicle identity that the marking information of which is the second marking information from the target correspondence according to the license plate number, when the background management device searches a vehicle identity corresponding to the license plate number from the target correspondence according to the license plate number in the vehicle monitoring information.

Scenario 2: Vehicle monitoring information includes a license plate number and a monitoring time.

In one possible implementation, if the first radar video device is the first one in the radar video devices for monitoring the vehicle in relays, the vehicle identity of the vehicle is generated according to the license plate number and the monitoring time, and the license plate number and the vehicle identity are stored in the target correspondence, which indicates the correspondence between the license plate number and the vehicle identity. In this scenario, if the first radar video device is the non-first one in the radar video devices for monitoring the vehicle in relays, an implementation process of querying the vehicle identity according to the vehicle monitoring information is as follows: according to the license plate number in the vehicle monitoring information, searching a vehicle identity corresponding to the license plate number from the target correspondence. At this time, only the monitoring time reported by the first one in the radar video devices is used to generate the vehicle identity, and other non-first one in the radar video devices may or may not report the monitoring time.

In another possible implementation, if the first radar video device is the first one in the radar video devices for monitoring the vehicle in relays, the vehicle identity of the vehicle is generated according to the license plate number and the monitoring time, and the license plate number, the monitoring time and the vehicle identity are stored in the target correspondence, which indicates a correspondence among the license plate number, the monitoring time and the vehicle identity. In this scenario, if the first radar video device is the non-first one in the radar video devices for monitoring the vehicle in relays, an implementation process of querying the vehicle identity according to the vehicle monitoring information is as follows: according to the license plate number and the monitoring time in the vehicle monitoring information, searching a vehicle identity corresponding to the license plate number and the monitoring time from the target correspondence, wherein the difference between the monitoring time corresponding to the acquired vehicle identity in the target correspondence and the monitoring time reported by the first radar video device is within a reference time, so as to obtain the vehicle identity of the vehicle.

In order to distinguish a same vehicle that passing through the traveling road corresponding to the same monitoring logical link for many times, the monitoring time of the first one in the radar video devices is introduced into the above-mentioned vehicle identity as a consideration factor. Therefore, for the non-first one in the radar video devices, the monitoring time reported by the current radar video device is compared with that reported by the first one in the radar video devices, and if the difference between the monitoring time reported by the current radar video device and that reported by the first one in the radar video devices is within the reference time, it indicates that the currently monitored vehicle and the vehicle monitored by the first one in the radar video devices are the same vehicle.

In the case that the above-mentioned first radar video device is the first one in the radar video devices for monitoring the vehicle in relays, there are many ways to generate vehicle identity of the vehicle according to the license plate number and the monitoring time. In one possible implementation, the license plate number and the monitoring time are connected by special symbols to obtain a vehicle identity of the vehicle. For example, if the special symbol is ##, the license plate number is xxxxx, and the monitoring time is 14:00 on October 01, 2020, the generated vehicle identity is xxxxx##202010011400.

In addition, there are a plurality of entrances and intersections on the traveling road of a vehicle, so there may be a plurality of monitoring logical links. And a plurality of monitoring logical links may be stored in the background management device. At this time, in order to distinguish which of the plurality of monitoring logical links the vehicle is currently on, the device identity of the first one in the radar video devices, and/or the monitoring logical link identity, may be stored in the target correspondence, so as to distinguish different monitoring logical links. At this time, the above-mentioned target correspondence may be the first target correspondence or the second target correspondence, and the specific implementation method may refer to the detailed description in Scenario 1, which will not be repeated here.

In addition, in order to distinguish a same vehicle that passing through the traveling road corresponding to the same monitoring logical link for many times, the marking information of each vehicle identity may be further added into the target correspondence. For the specific implementation of the marking information, please refer to the detailed description in Scenario 1, which will not be repeated here.

In the second case, no monitoring logical link is stored in the background management device.

In the case that no monitoring logical link is stored in the background management device, it may be determined whether the radar video device is the first one in the radar video devices or the non-first one in the radar video devices for monitoring the vehicle in relays by means of the device information reported by the radar video device, and then the vehicle identity may be determined in different ways.

In one possible implementation, if it is specified in advance that the first one in the radar video devices for monitoring the vehicle in relays reports the monitoring time, and the non-first one in the radar video devices does not report the monitoring time, in this scenario, it may be determined whether the radar video device is the first one in the radar video devices or the non-first one in the radar video devices for monitoring the vehicle in relays based on whether the monitoring time is included in the vehicle monitoring information.

In another possible implementation, if the device information reported by each radar video device includes device identity and relaying parameter, in this scenario, it may be determined whether the radar video device is the first one in the radar video devices or the non-first one in the radar video devices for monitoring the vehicle in relays based on the relaying parameter reported by the radar video device.

In another possible implementation, if the device information reported by each radar video device includes device identity, and the relaying parameter corresponding to each device identity are stored in the background management device, in this scenario, it may be determined whether the radar video device is the first one in the radar video devices or the non-first one in the radar video devices for monitoring the vehicle in relays based on the relaying parameter of the radar video device.

The above-mentioned implementations are only several optional implementations for determining whether the radar video device is the first one in the radar video devices or the non-first one in the radar video devices for monitoring the vehicle in relays under the condition that no monitoring logical link is stored in the background management device, and the embodiment of the present application does not limit this.

For any radar video device, such as the first radar video device, after determining whether the first radar video device is the first one in the radar video devices or the non-first one in the radar video devices for monitoring the vehicle in relays, the process of determining the vehicle identity of the vehicle corresponding to the first radar video device may refer to the detailed description about steps b and c in the above-mentioned "the first case" and will not be repeated here.

Step 203: determining, by the background management device, complete traveling information of the vehicle on the traveling road according to the device information of the plurality of radar video devices, the vehicle monitoring information and the vehicle identity of the vehicle.

The background management device, with respect to each of the plurality of radar video devices, determines vehicle traveling information corresponding to each radar video device according to the vehicle identity of the vehicle, and obtains multiple pieces of vehicle traveling information of the vehicle, combines the multiple pieces of vehicle traveling information according to a relaying sequence of the plurality of radar video devices monitoring the vehicle in relays, to obtain complete traveling information of the vehicle on the traveling road.

With respect to the first case of step 202, in order to achieve a long-distance monitoring of the vehicle, the background management device determines complete traveling information of the vehicle on the traveling road as follows: according to the vehicle identity of the vehicle, acquiring the vehicle traveling information obtained by monitoring the vehicle by each of the plurality of radar video devices to obtain the multiple pieces of vehicle traveling information. According to the monitoring logical link, the multiple pieces of vehicle traveling information are combined to obtain the complete traveling information of the vehicle on the traveling road. That is, in the case that a monitoring logical link is stored in the background management device, the complete traveling information of the vehicle on the traveling road is the information determined according to the monitoring logical link, the device identities of a plurality of radar video devices, the vehicle monitoring information and the vehicle identity of the vehicle.

In some embodiments, every time the background management device receives a monitoring information reporting message sent by a radar video device, the device identity of the radar video device, the vehicle identity of the vehicle and the vehicle traveling information carried in the monitoring information reporting message are correspondingly stored. In this way, when determining the complete traveling information of the vehicle on the traveling road, the vehicle traveling information obtained by monitoring the vehicle by each of the plurality of radar video devices can be acquired from the correspondence according to the device identities of the plurality of radar video devices and the vehicle identity of the vehicle. Then, according to a sequence of the plurality of radar video devices in the monitoring logical link, the multiple pieces of vehicle traveling information are combined to obtain complete traveling information of the vehicle on the traveling road.

That is, if the first radar video device is not the last one in the radar video devices on the monitoring logical link, after receiving the monitoring information reporting message sent by the first radar video device, the background management device correspondingly stores the device identity of the first radar video device, the vehicle identity of the vehicle and the vehicle traveling information carried in the monitoring information reporting message. If the first radar video device is the last one in the radar video devices on the monitoring logical link, after receiving the monitoring information reporting message sent by the first radar video device, the background management device acquires the vehicle traveling information obtained by monitoring the vehicle by means of each of the plurality of radar video devices in the monitoring logical link. Then, according to a sequence of the plurality of radar video devices in the monitoring logical link, the multiple pieces of vehicle traveling information are combined to obtain complete traveling information of the vehicle on the traveling road.

Based on the above-mentioned description, the vehicle traveling information includes the traveling track, average traveling speed, traveling direction, etc.. Therefore, by combining the vehicle traveling information obtained by monitoring the vehicle by means of each of the plurality of radar video devices, the complete traveling track of the vehicle on the traveling road, the average traveling speed on the whole traveling road and the traveling direction, etc. can be obtained.

Optionally, after determining to obtain the complete traveling information of the vehicle on the traveling road, the background management device stores correspondence among the vehicle identity, the monitoring logical link and the complete traveling information. In this way, when the complete traveling information of a certain vehicle on a certain traveling road is subsequently queried, the corresponding complete traveling information can be acquired from the above correspondence according to the vehicle identity of the vehicle and the monitoring logical link.

Regard to the second case of step 202, in this case, no monitoring logical link is stored in the background management device, and in order to achieve the long-distance monitoring of the vehicle, the background management device determines the complete traveling information of the vehicle on the traveling road as: information determined according to the device identities of a plurality of first radar video devices, relaying parameters, vehicle monitoring information and the vehicle identity of the vehicle.

In one possible implementation, according to the vehicle identity of the vehicle, vehicle traveling information obtained by monitoring the vehicle by means of each of the plurality of radar video devices is acquired to obtain multiple pieces of vehicle traveling information. According to the device identity and relaying parameter, the multiple pieces of vehicle traveling information are combined to obtain the complete traveling information of the vehicle on the traveling road.

In the embodiment of the present application, since a plurality of radar video devices on the traveling road can be used for monitoring of the traveling information of the vehicle, after acquiring the vehicle monitoring information by the plurality of radar video devices, the complete traveling information of the vehicle on the traveling road can be determined to be obtained. That is to say, the complete traveling information of the vehicle on the traveling road can be obtained by monitoring the vehicle in relays by means of the plurality of radar video devices, so that long-distance vehicle traveling information can be intelligently obtained. In addition, radar function and image acquisition function are integrated in the radar video devices deployed on the traveling road, by combining the radar function and the image acquisition function, not only can the monitoring range be expanded, but also the accuracy of the monitoring vehicle information can be improved under the influence of environmental factors such as weather, lighting and erection angle. Therefore, the method provided by the embodiment of the present application can improve the accuracy, real-time and comprehensiveness of the monitoring vehicle information.

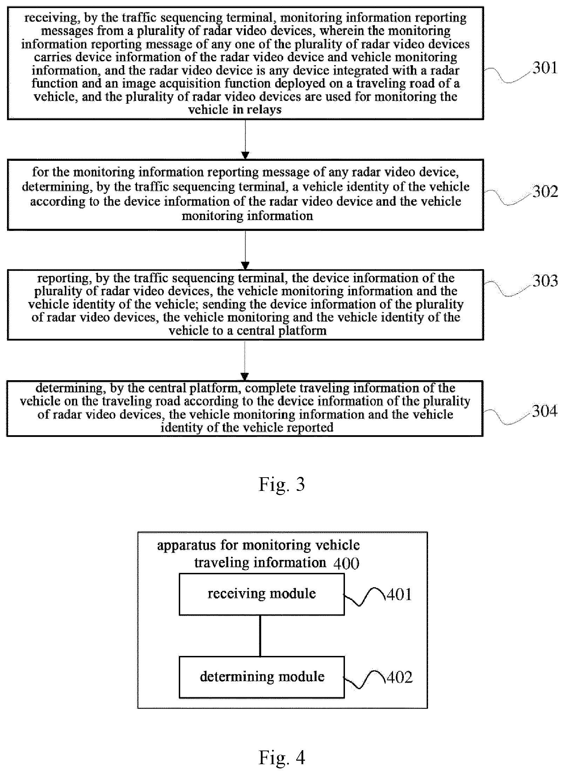

Fig. 3 is a flowchart of a method for monitoring vehicle traveling information provided by an embodiment of the present application. In an embodiment, the system includes a plurality of radar video devices, a traffic sequencing terminal and a central platform. That is, the following embodiment shown in Fig. 3 is applied to the traffic sequencing terminal and the central platform as an example for explanation. As shown in Fig. 3, the method for monitoring vehicle traveling information includes the following steps:
Step 301: receiving, by the traffic sequencing terminal, monitoring information reporting messages from a plurality of radar video devices, wherein the monitoring information reporting message of any one of the plurality of radar video devices carries device information of the radar video device and vehicle monitoring information monitored by the radar video device, and the radar video device is any device integrated with a radar function and an image acquisition function deployed on a traveling road of a vehicle, and the plurality of radar video devices are used for monitoring the vehicle in relays.

Wherein, the related explanation content of step 301 may refer to the related explanation content of step 201, and step 301 differs from step 201 in an executor, step 301 will not be repeated in the embodiment of the present application.

In order to achieve long-distance monitoring of the vehicle, after the traffic sequencing terminal receives the monitoring information reporting message from the radar video device, the traffic sequencing terminal and the central platform determine the complete traveling information of the vehicle on the traveling road according to the device identity of the radar video device, the vehicle monitoring information and the stored monitoring logical link according to the following steps.

Step 302: for the monitoring information reporting message of any radar video device, determining, by the traffic sequencing terminal, a vehicle identity of the vehicle according to the device information of the radar video device and the vehicle monitoring information.

Wherein, the implementation process of determining the vehicle identity of the vehicle by the traffic sequencing terminal is similar to the implementation process of determining the vehicle identity of the vehicle by the background management device in the embodiment of Fig. 2, and will not be repeated in the embodiment of the present application.

Step 303: reporting, by the traffic sequencing terminal, the device information of the plurality of radar video devices, the vehicle monitoring information and the vehicle identity of the vehicle.

That is, the device information of the plurality of radar video devices, the vehicle monitoring information monitored by the plurality of radar video devices and the vehicle identity of the vehicle are sent to the central platform.

Step 304: determining, by the central platform, complete traveling information of the vehicle on the traveling road according to the device information of the plurality of radar video devices, the vehicle monitoring information and the vehicle identity of the vehicle reported.

When the reported device information of a plurality of radar video devices includes device identity, the central platform determines the complete traveling information of the vehicle on the traveling road according to the stored monitoring logical link, the device information of the plurality of radar video devices, the vehicle monitoring information monitored by the plurality of radar video devices and the vehicle identity of the vehicle.

When the reported device information of a plurality of radar video device includes device identity and relaying parameter, the central platform determines the complete traveling information of the vehicle on the traveling road according to the device identity, the relaying parameter, the vehicle monitoring information and the vehicle identity of the vehicle.

Wherein, the implementation process of determining the complete traveling information of the vehicle on the traveling road by the central platform is similar to the implementation of determining the complete traveling information of the vehicle on the traveling road by the background management device in the embodiment of Fig. 2, which will not be repeated in the embodiment of the present application.

Optionally, after determining to obtain the complete traveling information of the vehicle on the traveling road, the central platform stores the correspondence among the vehicle identity, the monitoring logical link and the complete traveling information. In this way, when the complete traveling information of a certain vehicle on a certain traveling road is subsequently queried, the central platform can acquire the corresponding complete traveling information from the correspondence according to the vehicle identity of the vehicle and the monitoring logical link. Of course, the central platform may also send the complete traveling information of the vehicle on the traveling road to the traffic sequencing terminal, and the traffic sequencing terminal stores the correspondence among the vehicle identity, the monitoring logical link and the complete traveling information. In this way, when the complete traveling information of a certain vehicle on a certain traveling road is subsequently queried, the traffic sequencing terminal can acquire the corresponding complete traveling information from the above correspondence according to the vehicle identity of the vehicle and the monitoring logical link.

In the embodiment of the present application, since a plurality of radar video devices on the traveling road can be used for monitoring of the traveling information of the vehicle, after acquiring the vehicle monitoring information by the plurality of radar video devices, the complete traveling information of the vehicle on the traveling road can be determined to be obtained. That is to say, the complete traveling information of the vehicle on the traveling road can be obtained by monitoring the vehicle in relays by means of the plurality of radar video devices, so that long-distance vehicle traveling information can be intelligently obtained. In addition, radar function and image acquisition function are integrated in the radar video devices deployed on the traveling road, by combining the radar function and image acquisition function, not only can the monitoring range be expanded, but also the accuracy of the monitoring vehicle information can be improved under the influence of environmental factors such as weather, lighting and erection angle. Therefore, the method provided by the embodiment of the present application can improve the accuracy, real-time and comprehensiveness of the monitoring vehicle information.

All the optional technical solutions mentioned above may be combined in any way to form an optional embodiment of the present application, which will not be elaborated in detail in the present application.

Fig. 4 is a schematic diagram of a structure of an apparatus for monitoring vehicle traveling information provided by an embodiment of the present application. As shown in Fig. 4, the apparatus for monitoring vehicle traveling information 400 includes:
a receiving module 401, configured for receiving monitoring information reporting messages from a plurality of radar video devices, wherein the monitoring information reporting message of any one of the plurality of radar video devices carries device information of the radar video device and vehicle monitoring information monitored by the radar video device, and the radar video device is any device integrated with a radar function and an image acquisition function deployed on a traveling road of a vehicle, and the plurality of radar video devices are used for monitoring the vehicle in relays;
a determining module 402, configured for determining, for the monitoring information reporting message of any one of the radar video devices, a vehicle identity of the vehicle according to the device information of the radar video device and the vehicle monitoring information monitored by the radar video device;
wherein the determining module 402 is further configured for determining complete traveling information of the vehicle on the traveling road according to the device information of the plurality of radar video devices, the vehicle monitoring information respectively monitored by the plurality of radar video devices and the vehicle identity of the vehicle, or, reporting the device information of the plurality of radar video devices, the vehicle monitoring information respectively monitored by the plurality of radar video devices and the vehicle identity of the vehicle in order to determine the complete traveling information of the vehicle on the traveling road.

Optionally, the device information of the radar video device includes the device identity of the radar video device;
the determining module 402 is further configured for:
determining the vehicle identity of the vehicle according to the device identity of the radar video device, the vehicle monitoring information monitored by the radar video device and a stored monitoring logical link; wherein, the monitoring logical link refers to a link for monitoring the traveling information of the vehicle formed by the plurality of radar video devices;
wherein the complete traveling information of the vehicle on the traveling road is information determined according to the stored monitoring logical link, the device identities of the plurality of radar video devices, the vehicle monitoring information respectively monitored by the plurality of radar video devices and the vehicle identity of the vehicle;
optionally, the determining module 402 is further configured for:
   determining, according to the device information of the radar video device, whether the radar video device is a first one in the radar video devices or a non-first one in the radar video devices for monitoring the vehicle in relays;
   if the radar video device is the first one in the radar video devices for monitoring the vehicle in relays, generating the vehicle identity of the vehicle according to the vehicle monitoring information monitored by the radar video device;
   if the radar video device is the non-first one in the radar video devices for monitoring the vehicle in relays, querying the vehicle identity of the vehicle according to the vehicle monitoring information monitored by the radar video device.

Optionally, vehicle monitoring information monitored by the first one in the radar video devices for monitoring the vehicle in relays among the plurality of radar video devices includes a license plate number of the vehicle and a monitoring time; and vehicle monitoring information monitored by the non-first one in the radar video devices for monitoring the vehicle in relays among the plurality of radar video devices includes the license plate number of the vehicle;
if the radar video device is the first one in the radar video devices for monitoring the vehicle in relays, the determining module 402 is further configured for generating the vehicle identity of the vehicle according to the license plate number and the monitoring time; adding the vehicle identity of the vehicle and the license plate number to a target correspondence, wherein the target correspondence indicates a correspondence between the license plate number and the vehicle identity;
if the radar video device is the non-first one in the radar video devices for monitoring the vehicle in relays, the determining module 402 is further configured for: according to the license plate number, acquiring the vehicle identity of the vehicle from the target correspondence.

Optionally, the device information of the radar video device includes the device identity of the radar video device, and the determining module 402 is further configured for:
according to the device identity of the radar video device, determining whether the radar video device is the first one in the radar video devices or the non-first one in the radar video devices on the monitoring logical link through the stored monitoring logical link, wherein the monitoring logical link refers to a link for monitoring the traveling information of the vehicle formed by the plurality of radar video devices.

Optionally, if the radar video device is the first one in the radar video devices for monitoring the vehicle in relays, the determining module 402 is configured for: adding the device information of the radar video device, the vehicle identity of the vehicle and the license plate number to first target correspondence, wherein the first target correspondence indicates correspondence among the device information, the license plate number and the vehicle identity; or, adding a monitoring logical link identity corresponding to the radar video device, the vehicle identity of the vehicle and the license plate number to a second target correspondence, wherein the second target correspondence indicates correspondence among the monitoring logical link identity, the license plate number and the vehicle identity;
if the radar video device is the non-first one in the radar video devices for monitoring the vehicle in relays, the determining module 402 is configured for:
according to the device information of the radar video device, determining device information of the first one in the radar video devices on the monitoring logical link through the monitoring logical link, and acquiring the vehicle identity of the vehicle from the first target correspondence according to the device information of the first one in the radar video devices and the license plate number; or, determining the monitoring logical link identity corresponding to the radar video device according to the device information of the radar video device, and acquiring the vehicle identity of the vehicle from the second target correspondence according to the monitoring logical link identity corresponding to the radar video device and the license plate number.

Optionally, each vehicle identity in the target correspondence also corresponds to marking information, which is first marking information or second marking information, wherein the first marking information indicates that corresponding vehicle identity is a vehicle identity corresponding to each radar video device which has been determined respectively for the monitoring information reporting messages of the plurality of radar video devices, and the second marking information indicates that a corresponding vehicle identity has not been determined for the monitoring information reporting message reported by at least one of the plurality of radar video devices;
the marking information corresponding to an acquired vehicle identity is the second marking information.

Optionally, the vehicle monitoring information monitored by the plurality of radar video devices each includes the license plate number of the vehicle and the monitoring time, and the determining module 402 is further configured for:
if the radar video device is the first one in the radar video devices for monitoring the vehicle in relays, adding the vehicle identity, the license plate number of the vehicle and the monitoring time to the target correspondence, and the target correspondence also indicates a correspondence among the license plate number, the monitoring time and the vehicle identity;
if the radar video device is the non-first one in the radar video devices for monitoring the vehicle in relays, the determining module 402 is configured for:
   according to the license plate number and the monitoring time, acquiring the vehicle identity of the vehicle from the target correspondence, wherein the difference between the monitoring time in the target correspondence corresponding to the acquired vehicle identity and the monitoring time reported by the radar video device is within reference time.

Optionally, the vehicle monitoring information includes vehicle traveling information; the determining module 402 is further configured for determining the complete traveling information of the vehicle on the traveling road by the following ways of:
for each of the plurality of radar video devices, determining vehicle traveling information corresponding to each radar video device according to the vehicle identity of the vehicle, and obtaining multiple pieces of vehicle traveling information of the vehicle;
combining the multiple pieces of vehicle traveling information according to a relaying sequence of the plurality of radar video devices monitoring the vehicle in relays, to obtain complete traveling information of the vehicle on the traveling road.

In the embodiment of the present application, since a plurality of radar video devices on the traveling road can be used for monitoring of the traveling information of the vehicle, after acquiring the vehicle monitoring information by the plurality of radar video devices, the complete traveling information of the vehicle on the traveling road can be determined to be obtained. That is, through the monitoring of the vehicle in relays by means of the plurality of radar video devices, complete traveling information of the vehicle on the traveling road can be obtained, so that long-distance vehicle traveling information can be intelligently obtained. In addition, the radar function and the image acquisition function are integrated in the radar video devices deployed on the traveling road, by combining the radar function and the image acquisition function, not only can the monitoring range be expanded, but also the accuracy of the monitoring vehicle information can be improved under the influence of environmental factors such as weather, lighting and erection angle. Therefore, the method provided by the embodiment of the present application can improve the accuracy, real-time and comprehensiveness of the monitoring vehicle information.

It should be noted that: when the apparatus for monitoring vehicle traveling information provided in the above-mentioned embodiment monitors the traveling of the vehicle, the division of each functional module mentioned above is only taken as an example. In practical application, the above-mentioned function may be assigned to different functional modules as required, that is, the internal structure of the apparatus is divided into different functional modules to complete all or part of the above-mentioned functions. In addition, the apparatus for monitoring vehicle traveling information provided in the above-mentioned embodiment belongs to the same concept as the method embodiment for monitoring vehicle traveling information, and the specific implementation process is detailed in the method embodiment, which is not repeated here.

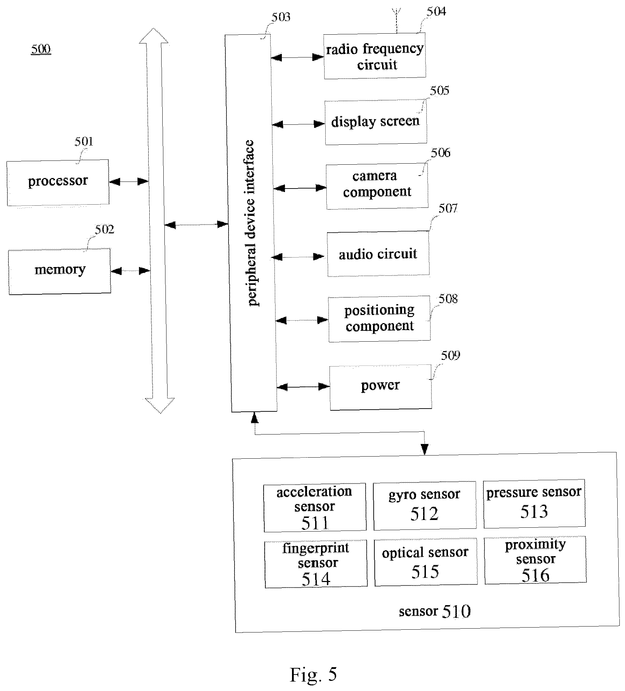

Fig. 5 is a schematic diagram of a structure of an electronic device 500 provided by an embodiment of the present application. The electronic device may be used as the above-mentioned background management device, traffic sequencing terminal, central platform and so on. The electronic device 500 may be a portable mobile terminal, such as a smart phone, a tablet computer, an MP3 (Moving Picture Experts Group Audio Layer III) player, an MP4 (Moving Picture Experts Group Audio Layer IV) player, a notebook computer or a desktop computer. The electronic device 500 may also be called a user device, a portable terminal, a laptop terminal, a desktop terminal or others.

Generally, an electronic device 500 includes a processor 501 and a memory 502.

The processor 501 may include one or more processing cores, such as a 4-core processor, an 8-core processor, etc. The processor 501 may be implemented in at least one hardware form of DSP (Digital Signal Processing), FPGA (Field -Programmable Gate Array) and PLA (Programmable Logic Array). The processor 501 may also include a main processor and a co-processor. The main processor is a processor for processing the data in the awake state, also called CPU (Central Processing Unit). The co-processor is a low-power processor for processing data in standby state. In some embodiments, the processor 501 may be integrated with a GPU (Graphics Processing Unit), and the GPU is used for rendering and drawing content to be displayed on the display screen. In some embodiments, the processor 501 may further include an AI (Artificial Intelligence) processor, which is used for processing computing operations related to machine learning.

The memory 502 may include one or more computer-readable storage media, which may be non-transitory. The memory 502 may also include high-speed random access memory, and non-volatile memory, such as one or more magnetic disk storage devices and flash memory storage devices. In some embodiments, the non-transient computer-readable storage medium in the memory 502 is used to store at least one instruction, which is used to be executed by the processor 501 to achieve the method for monitoring vehicle traveling information provided by the method embodiment in the present application.

In some embodiments, the electronic device 500 also optionally includes: a peripheral device interface 503 and at least one peripheral device. The processor 501, memory 502 and peripheral device interface 503 can be connected by a bus or a signal line. Each peripheral device may be connected to the peripheral device interface 503 via a bus, a signal line or a circuit board. Specifically, the peripheral device includes at least one of a radio frequency circuit 504, a display screen 505, a camera component 506, an audio circuit 507, a positioning component 508 and a power 509.

The peripheral device interface 503 may be used to connect at least one peripheral device related to I/O (Input /Output) to the processor 501 and the memory 502. In some embodiments, the processor 501, the memory 502 and the peripheral device interface 503 are integrated on a same chip or circuit board; in some other embodiments, any one or two of the processor 501, the memory 502 and the peripheral device interface 503 can be implemented on separate chips or circuit boards, which is not limited by the present application.

The radio frequency circuit 504 is used to receive and transmit RF (Radio Frequency) signals, also called electromagnetic signals. The radio frequency circuit 504 communicates with the communication network and other communication devices via electromagnetic signals. The radio frequency circuit 504 converts an electrical signal into an electromagnetic signal for transmission, alternatively, converts a received electromagnetic signal into an electrical signal. Optionally, the radio frequency circuit 504 includes an antenna system, an RF transceiver, one or more amplifiers, a tuner, an oscillator, a digital signal processor, an encoding and decoding chipset, a user identity module card, etc. The radio frequency circuit 504 may communicate with other terminals through at least one wireless communication protocol. The wireless communication protocols include, but are not limited to, World Wide Web, Metropolitan Area Network, Intranet, various generations of mobile communication networks (2G, 3G, 4G and 5G), wireless local area network and/or WiFi (Wireless Fidelity) network. In some embodiments, the radio frequency circuit 504 may also include circuits related to NFC (Near Field Communication), which is not limited by the present application.

The display screen 505 is used to display an UI (User Interface). The UI may include graphics, text, icons, videos and any combination thereof. When the display screen 505 is a touch display screen, the display screen 505 also has the ability to acquire touch signals on or above the surface of the display screen 505. The touch signal may be input to the processor 501 as a control signal for processing. At this time, the display screen 505 may also be used to provide virtual buttons and/or virtual keyboards, also called soft buttons and/or soft keyboards. In some embodiments, there may be one display screen 505, which is arranged on the front panel of the electronic device 500; in other embodiments, there may be at least two display screens 505, which are respectively arranged on different surfaces of the electronic device 500 or in a folded design; in other embodiments, the display screen 505 may be a flexible display screen arranged on a curved surface or a folded surface of the electronic device 500. The display screen 505 may even be set as a non-rectangular irregular pattern, that is, a special-shaped screen. The display screen 505 may be made of materials such as LCD (Liquid Crystal Display) and OLED (Organic Light-Emitting Diode).

The camera component 506 is used to capture images or videos. Optionally, the camera component 506 includes a front camera and a rear camera. Usually, the front camera is arranged on the front panel of the terminal, and the rear camera is arranged on the back of the terminal. In some embodiments, there are at least two rear cameras, which are any one of a main camera, a depth-of-field camera, a wide-angle camera and a telephoto camera, so as to achieve the fusion of the main camera and the depth-of-field camera to achieve the background blur function, the fusion of the main camera and the wide-angle camera to achieve panoramic shooting, VR (Virtual Reality) shooting function or other fusion shooting functions. In some embodiments, the camera component 506 may also include a flash. The flash may be a single color temperature flash or a dual color temperature flash. The dual color temperature flash refers to a combination of a warm light flash and a cold light flash, which may be used for light compensation under different color temperatures.

The audio circuit 507 may include a microphone and a speaker. The microphone is used to acquire sound waves from users and the environment, and convert the sound waves into electrical signals and input them to the processor 501 for processing, or to the radio frequency circuit 504 for voice communication. For the purpose of stereo acquisition or noise reduction, there may be a plurality of microphones, which are respectively arranged at different parts of the electronic device 500. The microphone may also be an array microphone or an omni-directional acquisition microphone. The speaker is used to convert an electrical signal from the processor 501 or the radio frequency circuit 504 into sound waves. The speaker may be a traditional thin film speaker or a piezoelectric ceramic speaker. When the speaker is a piezoelectric ceramic speaker, it may not only convert electrical signals into sound waves that can be heard by humans, but also convert electrical signals into sound waves that cannot be heard by humans for ranging or other purposes. In some embodiments, the audio circuit 507 may also include an earphone jack.

The positioning component 508 is used for positioning the current geographical position of the electronic device 500 to achieve navigation or LBS (Location Based Service). The positioning component 508 may be a positioning component based on GPS (Global Positioning System) of the United States, Beidou system of China or Galileo system of Russia.

The power 509 is used to supply power to various components in the electronic device 500. The power 509 may be alternating current, direct current, disposable battery or rechargeable battery. When the power 509 includes a rechargeable battery, the rechargeable battery may be a wired rechargeable battery or a wireless rechargeable battery. The wired rechargeable batteries are batteries charged by wired lines, and the wireless rechargeable batteries are batteries charged by wireless coils. The rechargeable battery may also be used to support fast charging technology.

In some embodiments, the electronic device 500 further includes one or more sensors 510. The one or more sensors 510 include, but are not limited to, an acceleration sensor 511, a gyro sensor 512, a pressure sensor 66, a fingerprint sensor 514, an optical sensor 515 and a proximity sensor 516.

The acceleration sensor 511 may detect the magnitude of acceleration on three coordinate axes of the coordinate system established by the electronic device 500. For example, the acceleration sensor 511 may be used to detect components of gravity acceleration on three coordinate axes. The processor 501 may control the display screen 505 to display the user interface in a landscape view or a portrait view according to the gravity acceleration signal acquired by the acceleration sensor 511. The acceleration sensor 511 may also be used for the acquisition of game or user's sports data.

The gyro sensor 512 may detect the body direction and rotation angle of the electronic device 500, and the gyro sensor 512 may acquire the 3D actions of the user on the electronic device 500 in cooperation with the acceleration sensor 511. Based on the data acquired by the gyro sensor 512, the processor 501 may realize the following functions: motion sensing (such as changing the UI according to the user's tilt operation), image stabilization during shooting, game controlling and inertial navigation.

The pressure sensor 66 may be arranged on a side frame of the electronic device 500 and/or a lower layer of the display screen 505. When the pressure sensor 66 is arranged on the side frame of the electronic device 500, it may detect the user's grip signal on the electronic device 500, and the processor 501 may recognize the left or right hand or perform shortcut operation according to the grip signal acquired by the pressure sensor 66. When the pressure sensor 66 is arranged on the lower layer of the display screen 505, the processor 501 controls the operability controls on the UI interface according to the user's pressure operation on the display screen 505. The operability control includes at least one of a button control, a scroll bar control, an icon control and a menu control.

The fingerprint sensor 514 is used to acquire the user's fingerprint, and the processor 501 identifies the user's identity according to the fingerprint acquired by the fingerprint sensor 514, or the fingerprint sensor 514 identifies the user's identity according to the acquired fingerprint. When the user's identity is recognized as a trusted identity, the processor 501 authorizes the user to perform relevant sensitive operations, including unlocking a screen, viewing encrypted information, downloading software, paying and changing settings. The fingerprint sensor 514 may be disposed on the front, back or side of the electronic device 500. When the electronic device 500 is provided with a physical key or a manufacturer Logo, the fingerprint sensor 514 may be integrated with the physical key or the manufacturer Logo.

The optical sensor 515 is used to acquire ambient light intensity. In one embodiment, the processor 501 may control display brightness of the display screen 505 according to the ambient light intensity acquired by the optical sensor 515. Specifically, when the ambient light intensity is high, the display brightness of the display screen 505 is increased; and when the ambient light intensity is low, the display brightness of the display screen 505 is decreased. In another embodiment, the processor 501 may also dynamically adjust shooting parameters of the camera component 506 according to the ambient light intensity acquired by the optical sensor 515.

The proximity sensor 516, also called a distance sensor, is usually arranged on the front panel of the electronic device 500. The proximity sensor 516 is used to acquire a distance between the user and the front of the electronic device 500. In one embodiment, when the proximity sensor 516 detects that the distance between the user and the front of the electronic device 500 is gradually decreasing, the processor 501 controls the display screen 505 to switch from a bright screen state to a resting screen state; and when the proximity sensor 516 detects that the distance between the user and the front of the electronic device 500 is gradually increasing, the processor 501 controls the display screen 505 to switch from the resting screen state to the bright screen state.

It can be understood by those skilled in the art that the structure shown in Fig. 5 does not constitute a limitation to the electronic device 500, which may include more or less components than shown, or combine some components, or adopt different component arrangements.

The embodiment of the present application further provides a non-transitory computer-readable storage medium, which enables the electronic device to execute the method for monitoring vehicle traveling information provided by the above-mentioned embodiment when the instructions in the storage medium are executed by the processor of the electronic device.

The embodiment of the present application further provides a computer program product containing instructions, which, when run on an electronic device, enables the electronic device to execute the method for monitoring vehicle traveling information provided in the above-mentioned embodiment.

Those skilled in the art can understand that all or part of the steps to achieve the above-mentioned embodiment may be completed by hardware, or may be completed by a program instructing related hardware, the program may be stored in a computer-readable storage medium, and the above-mentioned storage medium can be read-only memory, magnetic disk or optical disk, etc.

The above-mentioned embodiments are only the preferred ones of the embodiment of the present application, and they are not used to limit the embodiment of the present application.

## Claims

1. A method for monitoring vehicle traveling information, **characterized in that** the method comprises:
receiving (201, 301) monitoring information reporting messages from a plurality of radar video devices (110), wherein a monitoring information reporting message of any one of the plurality of radar video devices (110) carries device information of the radar video device and vehicle monitoring information monitored by the radar video device, and the radar video device is any device integrated with a radar function and an image acquisition function and deployed on a traveling road of a vehicle, and the plurality of radar video devices are used for monitoring the vehicle in relays;
determining (202, 302), for the monitoring information reporting message of any one of the plurality of radar video devices, a vehicle identity of the vehicle according to the device information of the radar video device and the vehicle monitoring information monitored by the radar video device;
determining (203) complete traveling information of the vehicle on the traveling road according to device information of the plurality of radar video devices, vehicle monitoring information respectively monitored by the plurality of radar video devices and the vehicle identity of the vehicle, or, reporting (303) device information of the plurality of radar video devices, vehicle monitoring information respectively monitored by the plurality of radar video devices and the vehicle identity of the vehicle in order to determine (304) complete traveling information of the vehicle on the traveling road,
wherein the device information of the radar video device comprises a device identity of the radar video device;
wherein determining the vehicle identity of the vehicle according to the device information of the radar video device and the vehicle monitoring information monitored by the radar video device comprises :
determining the vehicle identity of the vehicle according to the device identity of the radar video device, the vehicle monitoring information monitored by the radar video device and a stored monitoring logical link; wherein, the monitoring logical link refers to a link for monitoring the traveling information of the vehicle formed by the plurality of radar video devices;
wherein the complete traveling information of the vehicle on the traveling road is information determined according to the stored monitoring logical link, the device identities of the plurality of radar video devices, the vehicle monitoring information respectively monitored by the plurality of radar video devices and the vehicle identity of the vehicle,
wherein determining the vehicle identity of the vehicle according to the device information of the radar video device and the vehicle monitoring information monitored by the radar video device comprises :
determining, according to the device information of the radar video device, whether the radar video device is a first one in the radar video devices or a non-first one in the radar video devices for monitoring the vehicle in relays;
if the radar video device is the first one in the radar video devices for monitoring the vehicle in relays, generating the vehicle identity of the vehicle according to the vehicle monitoring information monitored by the radar video device;
if the radar video device is the non-first one in the radar video devices for monitoring the vehicle in relays, querying the vehicle identity of the vehicle according to the vehicle monitoring information monitored by the radar video device,
wherein the vehicle monitoring information comprises vehicle traveling information; the complete traveling information of the vehicle on the traveling road is determined by:
for each of the plurality of radar video devices, determining vehicle traveling information corresponding to each of the plurality of radar video devices according to the vehicle identity of the vehicle, and obtaining multiple pieces of vehicle traveling information of the vehicle;
combining the multiple pieces of vehicle traveling information according to a relaying sequence of the plurality of radar video devices monitoring the vehicle in relays, to obtain the complete traveling information of the vehicle on the traveling road.

2. The method according to claim 1, wherein vehicle monitoring information monitored by the first one in the radar video devices for monitoring the vehicle in relays among the plurality of radar video devices comprises a license plate number of the vehicle and a monitoring time; vehicle monitoring information monitored by the non-first one in the radar video devices for monitoring the vehicle in relays among the plurality of radar video devices comprises the license plate number of the vehicle;
if the radar video device is the first one in the radar video devices for monitoring the vehicle in relays, generating the vehicle identity of the vehicle according to the vehicle monitoring information monitored by the radar video device comprises
generating the vehicle identity of the vehicle according to the license plate number and the monitoring time; adding the vehicle identity of the vehicle and the license plate number to a target correspondence, wherein the target correspondence indicates a correspondence between the license plate number and the vehicle identity;
if the radar video device is the non-first one in the radar video devices for monitoring the vehicle in relays, querying the vehicle identity of the vehicle according to the vehicle monitoring information monitored by the radar video device, comprises:
acquiring, according to the license plate number, the vehicle identity of the vehicle from the target correspondence.

3. The method according to claim 1, wherein the device information of the radar video device comprises the device identity of the radar video device;
determining, according to the device information of the radar video device, whether the radar video device is the first one in the radar video devices or the non-first one in the radar video devices for monitoring the vehicle in relays, comprises:
determining, according to the device identity of the radar video device, whether the radar video device is the first one in the radar video devices or the non-first one in the radar video devices on the monitoring logical link through the stored monitoring logical link, wherein the monitoring logical link refers to a link for monitoring the traveling information of the vehicle formed by the plurality of radar video devices.

4. The method according to claim 2, wherein, if the radar video device is the first one in the radar video devices for monitoring the vehicle in relays, adding the vehicle identity of the vehicle and the license plate number to the target correspondence, comprises:
adding the device information of the radar video device, the vehicle identity of the vehicle and the license plate number to a first target correspondence, wherein the first target correspondence indicates a correspondence among the device information, the license plate number and the vehicle identity; or, adding a monitoring logical link identity corresponding to the radar video device, the vehicle identity of the vehicle and the license plate number to a second target correspondence, wherein the second target correspondence indicates a correspondence among the monitoring logical link identity, the license plate number and the vehicle identity;
if the radar video device is the non-first one in the radar video devices for monitoring the vehicle in relays, acquiring, according to the license plate number, the vehicle identity of the vehicle from the target correspondence, comprises:
determining, according to the device information of the radar video device, device information of the first one in the radar video devices on the monitoring logical link through the monitoring logical link, and acquiring the vehicle identity of the vehicle from the first target correspondence according to the device information of the first one in the radar video devices and the license plate number; or, determining the monitoring logical link identity corresponding to the radar video device according to the device information of the radar video device, and acquiring the vehicle identity of the vehicle from the second target correspondence according to the monitoring logical link identity corresponding to the radar video device and the license plate number.

5. The method according to claim 2, wherein each of the vehicle identities in the target correspondence also corresponds to marking information, which is first marking information or second marking information, wherein the first marking information indicates that a corresponding vehicle identity is a vehicle identity corresponding to each of the radar video devices which has been determined respectively for the monitoring information reporting messages of the plurality of radar video devices, and the second marking information indicates that a corresponding vehicle identity has not been determined for the monitoring information reporting message reported by at least one of the plurality of radar video devices;
the marking information corresponding to an acquired vehicle identity is the second marking information.

6. The method according to claim 2, wherein the vehicle monitoring information monitored by the plurality of radar video devices each includes the license plate number of the vehicle and the monitoring time;
if the radar video device is the first one in the radar video devices for monitoring the vehicle in relays, adding the vehicle identity of the vehicle and the license plate number to the target correspondence, comprises: adding the vehicle identity of the vehicle, the license plate number and the monitoring time to the target correspondence, and the target correspondence indicates a correspondence among the license plate number, the monitoring time and the vehicle identity;
if the radar video device is the non-first one in the radar video devices for monitoring the vehicle in relays, acquiring, according to the license plate number, the vehicle identity of the vehicle from the target correspondence, comprises:
acquiring, according to the license plate number and the monitoring time, the vehicle identity of the vehicle from the target correspondence, wherein a difference between a monitoring time in the target correspondence corresponding to an acquired vehicle identity and a monitoring time reported by the radar video device is within a reference time.

7. An apparatus (400) for monitoring vehicle traveling information, **characterized in that** the apparatus comprises:
a receiving module (401), configured for receiving monitoring information reporting messages from a plurality of radar video devices, wherein a monitoring information reporting message of any one of the plurality of radar video devices carries device information of the radar video device and vehicle monitoring information monitored by the radar video device, and the radar video device is any device integrated with a radar function and an image acquisition function and deployed on a traveling road of a vehicle, and the plurality of radar video devices are used for monitoring the vehicle in relays;
a determining module (402), configured for determining, for the monitoring information reporting message of any one of the plurality of radar video devices, a vehicle identity of the vehicle according to the device information of the radar video device and the vehicle monitoring information monitored by the radar video device;
the determining module (402) is further configured for determining complete traveling information of the vehicle on the traveling road according to device information of the plurality of radar video devices, vehicle monitoring information respectively monitored by the plurality of radar video devices and the vehicle identity of the vehicle, or, reporting device information of the plurality of radar video devices, vehicle monitoring information respectively monitored by the plurality of radar video devices and the vehicle identity of the vehicle in order to determine the complete traveling information of the vehicle on the traveling road,
wherein the device information of the radar video device comprises a device identity of the radar video device;
the determining module (402) is further configured for:
determining the vehicle identity of the vehicle according to the device identity of the radar video device, the vehicle monitoring information monitored by the radar video device and a stored monitoring logical link; wherein, the monitoring logical link refers to a link for monitoring the traveling information of the vehicle formed by the plurality of radar video devices;
wherein the complete traveling information of the vehicle on the traveling road is information determined according to the stored monitoring logical link, the device identities of the plurality of radar video devices, the vehicle monitoring information respectively monitored by the plurality of radar video devices and the vehicle identity of the vehicle,
wherein the determining module (402) is further configured for:
determining, according to the device information of the radar video device, whether the radar video device is a first one in the radar video devices or a non-first one in the radar video devices for monitoring the vehicle in relays;
if the radar video device is the first one in the radar video devices for monitoring the vehicle in relays, generating the vehicle identity of the vehicle according to the vehicle monitoring information monitored by the radar video device;
if the radar video device is the non-first one in the radar video devices for monitoring the vehicle in relays, querying the vehicle identity of the vehicle according to the vehicle monitoring information monitored by the radar video device;
the vehicle monitoring information comprises vehicle traveling information; the determining module is further configured for determining the complete traveling information of the vehicle on the traveling road by:
for each of the plurality of radar video devices, determining vehicle traveling information corresponding to each of the plurality of radar video devices according to the vehicle identity of the vehicle, and obtaining multiple pieces of vehicle traveling information of the vehicle;
combining the multiple pieces of vehicle traveling information according to a relaying sequence of the plurality of radar video devices monitoring the vehicle in relays, to obtain the complete traveling information of the vehicle on the traveling road.

8. The apparatus (400) according to claim 7, wherein
vehicle monitoring information monitored by the first one in the radar video devices for monitoring the vehicle in relays among the plurality of radar video devices comprises a license plate number of the vehicle and a monitoring time, vehicle monitoring information monitored by the non-first one in the radar video devices for monitoring the vehicle in relays among the plurality of radar video devices comprises the license plate number of the vehicle;
if the radar video device is the first one in the radar video devices for monitoring the vehicle in relays, the determining module is further configured for: generating the vehicle identity of the vehicle according to the license plate number and the monitoring time; adding the vehicle identity of the vehicle and the license plate number to a target correspondence, wherein the target correspondence indicates a correspondence between the license plate number and the vehicle identity;
if the radar video device is the non-first one in the radar video devices for monitoring the vehicle in relays, the determining module is further configured for: acquiring, according to the license plate number, the vehicle identity of the vehicle from the target correspondence;
the device information of the radar video device includes the device identity of the radar video device, the determining module is further configured for:
determining, according to the device identity of the radar video device, whether the radar video device is the first one in the radar video devices or the non-first one in the radar video devices on the monitoring logical link through the stored monitoring logical link, wherein the monitoring logical link refers to a link for monitoring the traveling information of the vehicle formed by the plurality of radar video devices;
if the radar video device is the first one in the radar video devices for monitoring the vehicle in relays, the determining module is further configured for: adding the device information of the radar video device, the vehicle identity of the vehicle and the license plate number to a first target correspondence, wherein the first target correspondence indicates a correspondence among the device information, the license plate number and the vehicle identity; or, adding a monitoring logical link identity corresponding to the radar video device, the vehicle identity of the vehicle and the license plate number to a second target correspondence, wherein the second target correspondence indicates a correspondence among the monitoring logical link identity, the license plate number and the vehicle identity;
if the radar video device is the non-first one in the radar video devices for monitoring the vehicle in relays, the determining module (402) is further configured for:
determining, according to the device information of the radar video device, device information of the first one in the radar video devices on the monitoring logical link through the monitoring logical link, and acquiring the vehicle identity of the vehicle from the first target correspondence according to the device information of the first one in the radar video devices and the license plate number; or, determining the monitoring logical link identity corresponding to the radar video device according to the device information of the radar video device, and acquiring the vehicle identity of the vehicle from the second target correspondence according to the monitoring logical link identity corresponding to the radar video device and the license plate number;
each of the vehicle identities in the target correspondence also corresponds to marking information, which is first marking information or second marking information, wherein the first marking information indicates that a corresponding vehicle identity is a vehicle identity corresponding to each of the radar video devices which has been determined respectively for the monitoring information reporting messages of the plurality of radar video devices, and the second marking information indicates that a corresponding vehicle identity has not been determined for the monitoring information reporting message reported by at least one of the plurality of radar video devices;
the marking information corresponding to an acquired vehicle identity is the second marking information;
the vehicle monitoring information monitored by the plurality of radar video devices each includes the license plate number of the vehicle and the monitoring time, the determining module (402) is further configured for:
if the radar video device is the first one in the radar video devices for monitoring the vehicle in relays, the determining module is configured for: adding the vehicle identity of the vehicle, the license plate number and the monitoring time to the target correspondence, and the target correspondence indicates a correspondence among the license plate number, the monitoring time and the vehicle identity;
if the radar video device is the non-first one in the radar video devices for monitoring the vehicle in relays, the determining module is configured for:
acquiring, according to the license plate number and the monitoring time, the vehicle identity of the vehicle from the target correspondence, wherein a difference between a monitoring time in the target correspondence corresponding to an acquired vehicle identity and a monitoring time reported by the radar video device is within a reference time.

9. The apparatus (400) according to claim 7, further comprising:
a processor;
a memory for storing processor-executable instructions;
wherein, the processor is configured for executing steps of the method for monitoring vehicle traveling information according to any one of claims 1 to 6.

10. A non-transitory computer-readable storage medium, on which instructions are stored which, when executed by a processor, implement steps of the method for monitoring vehicle traveling information according to any one of claims 1 to 6.

11. A computer program product, which contains instructions which, when executed by a processor, implement steps of the method for monitoring vehicle traveling information according to any one of claims 1 to 6.

## Patentansprüche

1. Verfahren zur Überwachung von Fahrzeugfahrinformationen, **dadurch gekennzeichnet, dass** das Verfahren Folgendes umfasst:
Empfangen (201, 301) von Überwachungsinformationsmeldungen von einer Vielzahl von Radar-Videovorrichtungen (110), wobei eine Überwachungsinformationsmeldung einer beliebigen der Vielzahl von Radar-Videovorrichtungen (110) Vorrichtungsinformationen der Radar-Videovorrichtung und von der Radar-Videovorrichtung überwachte Fahrzeugüberwachungsinformationen enthält, und die Radar-Videovorrichtung eine beliebige Vorrichtung ist, die mit einer Radarfunktion und einer Bildaufnahmefunktion ausgestattet und auf einer Fahrstrecke eines Fahrzeugs eingesetzt ist, und die Vielzahl von Radar-Videovorrichtungen zur Überwachung des Fahrzeugs in Relais verwendet wird;
Ermitteln (202, 302), für die Überwachungsinformationsmeldung einer beliebigen der Vielzahl von Radar-Videovorrichtungen, einer Fahrzeugidentität des Fahrzeugs anhand den Vorrichtungsinformationen der Radar-Videovorrichtung und den von der Radar-Videovorrichtung überwachten Fahrzeugüberwachungsinformationen;
Ermitteln (203) vollständiger Fahrinformationen des Fahrzeugs auf der Fahrstrecke anhand der Vorrichtungsinformationen der Vielzahl von Radar-Videovorrichtungen, der jeweils von der Vielzahl von Radar-Videovorrichtungen überwachten Fahrzeugüberwachungsinformationen und der Fahrzeugidentität des Fahrzeugs, oder Melden (303) von Vorrichtungsinformationen der Vielzahl von Radar-Videovorrichtungen, der jeweils von der Vielzahl von Radar-Videovorrichtungen überwachten Fahrzeugüberwachungsinformationen und der Fahrzeugidentität des Fahrzeugs, um vollständige Fahrinformationen des Fahrzeugs auf der Fahrstrecke zu ermitteln (304),
wobei die Vorrichtungsinformationen der Radar-Videovorrichtung eine Vorrichtungsidentität der Radar-Videovorrichtung umfassen;
wobei
Ermitteln der Fahrzeugidentität des Fahrzeugs anhand der Vorrichtungsinformationen der Radar-Videovorrichtung und der von der Radar-Videovorrichtung überwachten Fahrzeugüberwachungsinformationen umfasst:
Ermitteln der Fahrzeugidentität des Fahrzeugs anhand der Vorrichtungsidentität der Radar-Videovorrichtung, der von der Radar-Videovorrichtung überwachten Fahrzeugüberwachungsinformationen und einer gespeicherten Überwachungslogikverbindung; wobei sich die Überwachungslogikverbindung auf eine Verbindung zur Überwachung der Fahrinformationen des Fahrzeugs bezieht, die von der Vielzahl von Radar-Videovorrichtungen gebildet wird;
wobei die vollständigen Fahrinformationen des Fahrzeugs auf der Fahrstrecke Informationen sind, die anhand der gespeicherten Überwachungslogikverbindung, den Vorrichtungsidentitäten der Vielzahl von Radar-Videovorrichtungen, den jeweils von der Vielzahl von Radar-Videovorrichtungen überwachten Fahrzeugüberwachungsinformationen und der Fahrzeugidentität des Fahrzeugs ermittelt werden,
wobei das Ermitteln der Fahrzeugidentität des Fahrzeugs anhand der Vorrichtungsinformationen der Radar-Videovorrichtung und der von der Radar-Videovorrichtung überwachten Fahrzeugüberwachungsinformationen Folgendes umfasst:
Ermitteln, anhand der Vorrichtungsinformationen der Radar-Videovorrichtung, ob die Radar-Videovorrichtung eine erste unter den Radar-Videovorrichtungen oder eine nicht-erste unter den Radar-Videovorrichtungen zur Überwachung des Fahrzeugs in Relais ist;
wenn die Radar-Videovorrichtung die erste unter den Radar-Videovorrichtungen zur Überwachung des Fahrzeugs in Relais ist, wird die Fahrzeugidentität des Fahrzeugs anhand der von der Radar-Videovorrichtung überwachten Fahrzeugüberwachungsinformationen erzeugt;
wenn die Radar-Videovorrichtung die nicht-erste unter den Radar-Videovorrichtungen zur Überwachung des Fahrzeugs in Relais ist, wird die Fahrzeugidentität des Fahrzeugs anhand der von der Radar-Videovorrichtung überwachten Fahrzeugüberwachungsinformationen abgefragt,
wobei die Fahrzeugüberwachungsinformationen die Fahrzeugfahrinformationen umfassen; die vollständigen Fahrinformationen des Fahrzeugs auf der Fahrstrecke ermittelt werden durch:
für jede der Vielzahl von Radar-Videovorrichtungen, Ermitteln der Fahrzeugfahrinformationen, die jeder der Vielzahl von Radar-Videovorrichtungen entsprechen, anhand der Fahrzeugidentität des Fahrzeugs, und Erhalten mehrerer Teile von Fahrzeugfahrinformationen des Fahrzeugs;
Kombinieren der mehreren Teile von Fahrzeugfahrinformationen anhand einer Relaissequenz der Vielzahl von Radar-Videovorrichtungen, die das Fahrzeug in Relais überwachen, um die vollständigen Fahrinformationen des Fahrzeugs auf der Fahrstrecke zu erhalten.

2. Verfahren nach Anspruch 1, wobei die von der ersten unter den Radar-Videovorrichtungen zur Überwachung des Fahrzeugs in Relais unter der Vielzahl von Radar-Videovorrichtungen überwachten Fahrzeugüberwachungsinformationen ein Kennzeichen des Fahrzeugs und eine Überwachungszeit umfassen; die von der nicht-ersten unter den Radar-Videovorrichtungen zur Überwachung des Fahrzeugs in Relais unter der Vielzahl von Radar-Videovorrichtungen überwachten Fahrzeugüberwachungsinformationen das Kennzeichen des Fahrzeugs umfassen;
wenn die Radar-Videovorrichtung die erste unter den Radar-Videovorrichtungen zur Überwachung des Fahrzeugs in Relais ist, umfasst das Erzeugen der Fahrzeugidentität des Fahrzeugs anhand der von der Radar-Videovorrichtung anhand des Kennzeichens und der Überwachungszeit Fahrzeugüberwachungsinformationen Folgendes:
Erzeugen der Fahrzeugidentität des Fahrzeugs anhand des Kennzeichens und der Überwachungszeit; Hinzufügen der Fahrzeugidentität des Fahrzeugs und des Kennzeichens zu einer Zielentsprechung, wobei die Zielentsprechung eine Entsprechung zwischen dem Kennzeichen und der Fahrzeugidentität angibt;
wenn die Radar-Videovorrichtung die nicht-erste unter den Radar-Videovorrichtungen zur Überwachung des Fahrzeugs in Relais ist, umfasst das Abfragen der Fahrzeugidentität des Fahrzeugs anhand der von der Radar-Videovorrichtung überwachten Fahrzeugüberwachungsinformationen Folgendes:
Erfassen, anhand des Kennzeichens, der Fahrzeugidentität des Fahrzeugs aus der Zielentsprechung.

3. Verfahren nach Anspruch 1, wobei die Vorrichtungsinformationen der Radar-Videovorrichtung die Vorrichtungsidentität der Radar-Videovorrichtung umfassen;
Ermitteln, anhand der Vorrichtungsinformationen der Radar-Videovorrichtung, ob es die Radar-Videovorrichtung die erste unter den Radar-Videovorrichtungen oder die nicht-erste unter den Radar-Videovorrichtungen zur Überwachung des Fahrzeugs in Relais ist, umfasst:
Ermitteln, anhand der Vorrichtungsidentität der Radar-Videovorrichtung, ob die Radar-Videovorrichtung die erste unter den Radar-Videovorrichtungen oder die nicht-erste unter den Radar-Videovorrichtungen in der Überwachungslogikverbindung ist, über die gespeicherte Überwachungslogikverbindung, wobei sich die Überwachungslogikverbindung auf eine Verbindung zur Überwachung der Fahrinformationen des Fahrzeugs bezieht, die durch die Vielzahl von Radar-Videovorrichtungen gebildet wird.

4. Verfahren nach Anspruch 2, wobei, wenn die Radar-Videovorrichtung die erste unter den Radar-Videovorrichtungen zur Überwachung des Fahrzeugs in Relais ist, das Hinzufügen der Fahrzeugidentität des Fahrzeugs und des Kennzeichens zur Zielentsprechung Folgendes umfasst:
Hinzufügen der Vorrichtungsinformationen der Radar-Videovorrichtung, der Fahrzeugidentität des Fahrzeugs und des Kennzeichens zu einer ersten Zielentsprechung, wobei die erste Zielentsprechung eine Entsprechung zwischen den Vorrichtungsinformationen, dem Kennzeichen und der Fahrzeugidentität angibt; oder Hinzufügen einer Überwachungslogikverbindungsidentität, die der Radar-Videovorrichtung, der Fahrzeugidentität des Fahrzeugs und dem Kennzeichen entspricht, zu einer zweiten Zielentsprechung, wobei die zweite Zielentsprechung eine Entsprechung zwischen der Überwachungslogikverbindungsidentität, dem Kennzeichen und der Fahrzeugidentität angibt;
wenn die Radar-Videovorrichtung die nicht-erste unter den Radar-Videovorrichtungen zur Überwachung des Fahrzeugs in Relais ist, umfasst das Erfassen, anhand des Kennzeichens, der Fahrzeugidentität des Fahrzeugs aus der Zielentsprechung Folgendes:
Ermitteln, anhand der Vorrichtungsinformationen der Radar-Videovorrichtung, von Vorrichtungsinformationen der ersten unter den Radar-Videovorrichtungen in der Überwachungslogikverbindung über die Überwachungslogikverbindung und Erfassen der Fahrzeugidentität des Fahrzeugs aus der ersten Zielentsprechung anhand der Vorrichtungsinformationen der ersten unter den Radar-Videovorrichtungen und des Kennzeichens; oder Ermitteln der der Radar-Videovorrichtung entsprechenden Überwachungslogikverbindungsidentität anhand der Vorrichtungsinformationen der Radar-Videovorrichtung, und Erfassen der Fahrzeugidentität des Fahrzeugs aus der zweiten Zielentsprechung anhand der der Radar-Videovorrichtung entsprechenden Überwachungslogikverbindungidentität und des Kennzeichens.

5. Verfahren nach Anspruch 2, wobei jede der Fahrzeugidentitäten in der Zielentsprechung auch Markierungsinformationen entspricht, die erste Markierungsinformationen oder zweite Markierungsinformationen sind, wobei die ersten Markierungsinformationen angeben, dass eine entsprechende Fahrzeugidentität eine Fahrzeugidentität ist, die jeder der Radar-Videovorrichtungen entspricht, die jeweils für die Überwachungsinformationsmeldungen der Vielzahl von Radar-Videovorrichtungen ermittelt wurde, und die zweiten Markierungsinformationen angeben, dass für die von mindestens einer der Vielzahl von Radar-Videovorrichtungen gemeldete Überwachungsinformationsmeldung keine entsprechende Fahrzeugidentität ermittelt wurde;
wobei die Markierungsinformationen, die einer erfassten Fahrzeugidentität entsprechen, die zweiten Kennzeichnungsinformationen sind.

6. Verfahren nach Anspruch 2, wobei die von der Vielzahl von Radar-Videovorrichtungen überwachten Fahrzeugüberwachungsinformationen jeweils das Kennzeichen des Fahrzeugs und die Überwachungszeit einschließen;
wenn die Radar-Videovorrichtung die erste unter den Radar-Videovorrichtungen zur Überwachung des Fahrzeugs in Relais ist, umfasst das Hinzufügen der Fahrzeugidentität des Fahrzeugs und des Kennzeichens zur Zielentsprechung Folgendes: Hinzufügen der Fahrzeugidentität des Fahrzeugs, des Kennzeichens und der Überwachungszeit zur Zielentsprechung, und wobei die Zielentsprechung eine Entsprechung zwischen dem Kennzeichen, der Überwachungszeit und der Fahrzeugidentität angibt;
wenn die Radar-Videovorrichtung die nicht-erste unter den Radar-Videovorrichtungen zur Überwachung des Fahrzeugs in Relais ist, umfasst das Erfassen, anhand des Kennzeichens, der Fahrzeugidentität des Fahrzeugs aus der Zielentsprechung Folgendes:
Erfassen, anhand des Kennzeichens und der Überwachungszeit, der Fahrzeugidentität des Fahrzeugs aus der Zielentsprechung, wobei eine Differenz zwischen einer Überwachungszeit in der Zielentsprechung, die einer erfassten Fahrzeugidentität entspricht, und einer von der Radar-Videovorrichtung gemeldeten Überwachungszeit innerhalb einer Referenzzeit liegt.

7. Einrichtung (400) zur Überwachung von Fahrzeugfahrinformationen, **dadurch gekennzeichnet, dass** die Einrichtung Folgendes umfasst:
ein Empfangsmodul (401), das zum Empfangen von Überwachungsinformationsmeldungen von einer Vielzahl von Radar-Videovorrichtungen konfiguriert ist, wobei eine Überwachungsinformationsmeldung einer beliebigen der Vielzahl von Radar-Videovorrichtungen Vorrichtungsinformationen der Radar-Videovorrichtung und von der Radar-Videovorrichtung überwachte Fahrzeugüberwachungsinformationen enthält, und die Radar-Videovorrichtung eine beliebige Vorrichtung ist, die mit einer Radarfunktion und einer Bildaufnahmefunktion ausgestattet und auf einer Fahrstrecke eines Fahrzeugs eingesetzt ist, und die Vielzahl von Radar-Videovorrichtungen zur Überwachung des Fahrzeugs in Relais verwendet wird;
ein Ermittlungsmodul (402), das so konfiguriert ist, dass es für die Überwachungsinformationsmeldung einer beliebigen der Vielzahl der Radar-Videovorrichtungen die Fahrzeugidentität des Fahrzeugs anhand der Vorrichtungsinformationen der Radar-Videovorrichtung und der von der Radar-Videovorrichtung überwachten Fahrzeugüberwachungsinformationen ermittelt;
das Ermittlungsmodul (402) ist weiter so konfiguriert, dass es die vollständigen Fahrinformationen des Fahrzeugs auf der Fahrstrecke anhand der Vorrichtungsinformationen der Vielzahl von Radar-Videovorrichtungen, der jeweils von der Vielzahl von Radar-Videovorrichtungen überwachten Fahrzeugüberwachungsinformationen und der Fahrzeugidentität des Fahrzeugs oder der Meldevorrichtungsinformationen der Vielzahl von Radar-Videovorrichtungen, der jeweils von der Vielzahl von Radar-Videovorrichtungen überwachten Fahrzeugüberwachungsinformationen und der Fahrzeugidentität des Fahrzeugs ermittelt, um die vollständigen Fahrinformationen des Fahrzeugs auf der Fahrstrecke zu ermitteln,
wobei die Vorrichtungsinformationen der Radar-Videovorrichtung eine Vorrichtungsidentität der Radar-Videovorrichtung umfassen;
das Ermittlungsmodul (402) weiter konfiguriert ist zum:
Ermitteln der Fahrzeugidentität des Fahrzeugs anhand der Vorrichtungsidentität der Radar-Videovorrichtung, der von der Radar-Videovorrichtung überwachten Fahrzeugüberwachungsinformationen und einer gespeicherten Überwachungslogikverbindung; wobei sich die Überwachungslogikverbindung auf eine Verbindung zur Überwachung der Fahrinformationen des Fahrzeugs bezieht, die von Vielzahl von Radar-Videovorrichtungen gebildet wird;
wobei die vollständigen Fahrinformationen des Fahrzeugs auf der Fahrstrecke Informationen sind, die anhand der gespeicherten Überwachungslogikverbindung, den Vorrichtungsidentitäten der Vielzahl von Radar-Videovorrichtungen, den jeweils von der Vielzahl von Radar-Videovorrichtungen überwachten Fahrzeugüberwachungsinformationen und der Fahrzeugidentität des Fahrzeugs ermittelt werden,
wobei das Ermittlungsmodul (402) weiter konfiguriert ist zum:
Ermitteln, anhand der Vorrichtungsinformationen der Radar-Videovorrichtung, ob die Radar-Videovorrichtung eine erste unter den Radar-Videovorrichtungen oder eine nicht-erste unter den Radar-Videovorrichtungen zur Überwachung des Fahrzeugs in Relais ist;
wenn die Radar-Videovorrichtung die erste unter den Radar-Videovorrichtungen zur Überwachung des Fahrzeugs in Relais ist, wird die Fahrzeugidentität des Fahrzeugs anhand der von der Radar-Videovorrichtung überwachten Fahrzeugüberwachungsinformationen erzeugt;
wenn die Radar-Videovorrichtung die nicht-erste unter den Radar-Videovorrichtungen zur Überwachung des Fahrzeugs in Relais ist, wird die Fahrzeugidentität des Fahrzeugs anhand der von der Radar-Videovorrichtung überwachten Fahrzeugüberwachungsinformationen abgefragt;
die Fahrzeugüberwachungsinformationen umfassen Fahrzeugfahrinformationen; das Ermittlungsmodul ist weiter so konfiguriert, dass es die vollständigen Fahrinformationen des Fahrzeugs auf der Fahrstrecke ermittelt durch:
für jede der Vielzahl von Radar-Videovorrichtungen, Ermitteln der Fahrzeugfahrinformationen, die jeder der Vielzahl von Radar-Videovorrichtungen entsprechen, anhand der Fahrzeugidentität des Fahrzeugs, und Erhalten mehrerer Teile von Fahrzeugfahrinformationen des Fahrzeugs;
Kombinieren der mehreren Teile von Fahrzeugfahrinformationen anhand einer Relaissequenz der Vielzahl von Radar-Videovorrichtungen, die das Fahrzeug in Relais überwachen, um die vollständigen Fahrinformationen des Fahrzeugs auf der Fahrstrecke zu erhalten.

8. Einrichtung (400) nach Anspruch 7, wobei
die von der ersten unter den Radar-Videovorrichtungen zur Überwachung des Fahrzeugs in Relais unter der Vielzahl von Radar-Videovorrichtungen überwachten Fahrzeugüberwachungsinformationen ein Kennzeichen des Fahrzeugs und eine Überwachungszeit umfassen, die von der nicht-ersten unter den Radar-Videovorrichtungen zur Überwachung des Fahrzeugs in Relais unter der Vielzahl von Radar-Videovorrichtungen überwachten Fahrzeugüberwachungsinformationen das Kennzeichen des Fahrzeugs umfassen;
wenn die Radar-Videovorrichtung die erste unter den Radar-Videovorrichtungen zur Überwachung des Fahrzeugs in Relais ist, ist das Ermittlungsmodul weiter konfiguriert zum: Erzeugen der Fahrzeugidentität des Fahrzeugs anhand des Kennzeichens und der Überwachungszeit; Hinzufügen der Fahrzeugidentität des Fahrzeugs und des Kennzeichens zu einer Zielentsprechung, wobei die Zielentsprechung eine Entsprechung zwischen dem Kennzeichen und der Fahrzeugidentität angibt;
wenn die Radar-Videovorrichtung die nicht-erste unter den Radar-Videovorrichtungen zur Überwachung des Fahrzeugs in Relais ist, ist das Ermittlungsmodul weiter konfiguriert zum: Erfassen, anhand des Kennzeichens, der Fahrzeugidentität des Fahrzeugs aus der Zielentsprechung;
die Vorrichtungsinformationen der Radar-Videovorrichtung die Vorrichtungsidentität der Radar-Videovorrichtung einschließen; das Ermittlungsmodul ist weiter konfiguriert zum:
Ermitteln, anhand der Vorrichtungsidentität der Radar-Videovorrichtung, ob die Radar-Videovorrichtung die erste unter den Radar-Videovorrichtungen oder die nicht-erste unter den Radar-Videovorrichtungen in der Überwachungslogikverbindung ist, über die gespeicherte Überwachungslogikverbindung, wobei sich die Überwachungslogikverbindung auf eine Verbindung zur Überwachung der Fahrinformationen des Fahrzeugs bezieht, die durch die Vielzahl von Radar-Videovorrichtungen gebildet wird;
wenn die Radar-Videovorrichtung die erste unter den Radar-Videovorrichtungen zur Überwachung des Fahrzeugs in Relais ist, ist das Ermittlungsmodul weiter konfiguriert zum: Hinzufügen der Vorrichtungsinformationen der Radar-Videovorrichtung, der Fahrzeugidentität des Fahrzeugs und des Kennzeichens zu einer ersten Zielentsprechung, wobei die erste Zielentsprechung eine Entsprechung zwischen den Vorrichtungsinformationen, dem Kennzeichen und der Fahrzeugidentität angibt; oder Hinzufügen einer Überwachungslogikverbindungsidentität, die der Radar-Videovorrichtung, der Fahrzeugidentität des Fahrzeugs und dem Kennzeichen entspricht, zu einer zweiten Zielentsprechung, wobei die zweite Zielentsprechung eine Entsprechung zwischen der Überwachungslogikverbindungsidentität, dem Kennzeichen und der Fahrzeugidentität angibt;
wenn die Radar-Videovorrichtung die nicht-erste unter den Radar-Videovorrichtungen zur Überwachung des Fahrzeugs in Relais ist, ist das Ermittlungsmodul (402) konfiguriert zum:
Ermitteln, anhand der Vorrichtungsinformationen der Radar-Videovorrichtung, von Vorrichtungsinformationen der ersten unter den Radar-Videovorrichtungen in der Überwachungslogikverbindung über die Überwachungslogikverbindung und Erfassen der Fahrzeugidentität des Fahrzeugs aus der ersten Zielentsprechung anhand der Vorrichtungsinformationen der ersten unter den Radar-Videovorrichtungen und des Kennzeichens; oder Ermitteln der der Radar-Videovorrichtung entsprechenden Überwachungslogikverbindungsidentität anhand der Vorrichtungsinformationen der Radar-Videovorrichtung, und Erfassen der Fahrzeugidentität des Fahrzeugs aus der zweiten Zielentsprechung anhand der der Radar-Videovorrichtung entsprechenden Überwachungslogikverbindungsidentität und des Kennzeichens;
jede der Fahrzeugidentitäten in der Zielentsprechung auch Markierungsinformationen entspricht, die erste Markierungsinformationen oder zweite Markierungsinformationen sind, wobei die ersten Markierungsinformationen angeben, dass eine entsprechende Fahrzeugidentität eine Fahrzeugidentität ist, die jeder der Radar-Videovorrichtungen entspricht, die jeweils für die Überwachungsinformationsmeldungen der Vielzahl von Radar-Videovorrichtungen ermittelt wurde, und die zweiten Markierungsinformationen angeben, dass für die von mindestens einer der Vielzahl von Radar-Videovorrichtungen gemeldete Überwachungsinformationsmeldung keine entsprechende Fahrzeugidentität ermittelt wurde;
wobei die Markierungsinformationen, die einer erfassten Fahrzeugidentität entsprechen, die zweiten Kennzeichnungsinformationen sind;
die von der Vielzahl von Radar-Videovorrichtungen überwachten Fahrzeugüberwachungsinformationen jeweils das Kennzeichen des Fahrzeugs und die Überwachungszeit einschließen; das Ermittlungsmodul (402) ist weiter konfiguriert zum:
wenn die Radar-Videovorrichtung die erste unter den Radar-Videovorrichtungen zur Überwachung des Fahrzeugs in Relais ist, ist das Ermittlungsmodul konfiguriert zum: Hinzufügen der Fahrzeugidentität des Fahrzeugs, des Kennzeichens und der Überwachungszeit zur Zielentsprechung, und wobei die Zielentsprechung eine Entsprechung zwischen dem Kennzeichen, der Überwachungszeit und der Fahrzeugidentität angibt;
wenn die Radar-Videovorrichtung die nicht-erste unter den Radar-Videovorrichtungen zur Überwachung des Fahrzeugs in Relais ist, ist das Ermittlungsmodul konfiguriert zum:
Erfassen, anhand des Kennzeichens und der Überwachungszeit, der Fahrzeugidentität des Fahrzeugs aus der Zielentsprechung, wobei eine Differenz zwischen einer Überwachungszeit in der Zielentsprechung, die einer erfassten Fahrzeugidentität entspricht, und einer von der Radar-Videovorrichtung gemeldeten Überwachungszeit innerhalb einer Referenzzeit liegt.

9. Einrichtung (400) nach Anspruch 7, weiter umfassend:
einen Prozessor;
einen Speicher zum Speichern von prozessorausführbaren Anweisungen;
wobei der Prozessor so konfiguriert ist, dass er Schritte des Verfahrens zur Überwachung von Fahrzeugfahrinformationen nach einem der Ansprüche 1 bis 6 ausführt.

10. Nichtflüchtiges, computerlesbares Speichermedium, auf dem Anweisungen gespeichert sind, die, wenn sie von einem Prozessor ausgeführt werden, Schritte des Verfahrens zur Überwachung von Fahrzeugfahrinformationen nach einem der Ansprüche 1 bis 6 implementieren.

11. Computerprogrammprodukt, das Anweisungen enthält, die, wenn sie von einem Prozessor ausgeführt werden, Schritte des Verfahrens zur Überwachung von Fahrzeugfahrinformationen nach einem der Ansprüche 1 bis 6 implementieren.

## Revendications

1. Procédé de surveillance d'informations de déplacement de véhicule, **caractérisé en ce que** le procédé comprend :
la réception (201, 301) de messages de signalement d'informations de surveillance à partir d'une pluralité de dispositifs vidéo radar (110), dans lequel un message de signalement d'informations de surveillance de l'un quelconque de la pluralité de dispositifs vidéo radar (110) transporte des informations de dispositif radar du dispositif vidéo radar et des informations de surveillance de véhicule surveillées par le dispositif vidéo radar, et le dispositif vidéo radar est tout dispositif intégré avec une fonction radar et une fonction d'acquisition d'image et déployé sur une route de déplacement d'un véhicule, et la pluralité de dispositifs vidéo radar est utilisée pour surveiller le véhicule en relais ;
la détermination (202, 302), pour le message de signalement d'informations de surveillance d'un quelconque de la pluralité de dispositifs vidéo radar, d'une identité de véhicule du véhicule selon les informations de dispositif du dispositif vidéo radar et les informations de surveillance de véhicule surveillées par le dispositif vidéo radar ;
la détermination (203) d'informations de déplacement complètes du véhicule sur la route de déplacement selon des informations de dispositif de la pluralité de dispositifs vidéo radar, des informations de surveillance de véhicule respectivement surveillées par la pluralité de dispositifs vidéo radar et l'identité de véhicule, ou, le signalement (303) d'informations de dispositif de la pluralité de dispositifs vidéo radar, des informations de surveillance de véhicule respectivement surveillées par la pluralité de dispositifs vidéo radar et l'identité de véhicule afin de déterminer (304) des informations de déplacement complètes du véhicule sur la route de déplacement,
dans lequel les informations de dispositif du dispositif vidéo radar comprennent une identité de dispositif du dispositif vidéo radar ;
dans lequel
la détermination de l'identité de véhicule du véhicule selon les informations de dispositif du dispositif vidéo radar et les informations de surveillance de véhicule surveillées par le dispositif vidéo radar comprend :
la détermination de l'identité de véhicule du véhicule selon l'identité de dispositif du dispositif vidéo radar, les informations de surveillance de véhicule surveillées par le dispositif vidéo radar et une liaison logique de surveillance stockée ; dans lequel la liaison logique de surveillance fait référence à une liaison pour la surveillance des informations de déplacement du véhicule formée par la pluralité de dispositifs vidéo radar ;
dans lequel les informations de déplacement complètes du véhicule sur la route de déplacement sont déterminées selon la liaison logique de surveillance enregistrée, des identités de dispositif de la pluralité de dispositifs vidéo radar, des informations de surveillance de véhicule respectivement surveillées par la pluralité de dispositifs vidéo radar et de l'identité de véhicule du véhicule,
dans lequel la détermination de l'identité de véhicule du véhicule selon les informations de dispositif du dispositif vidéo radar et les informations de surveillance de véhicule surveillées par le dispositif vidéo radar comprend :
la détermination, selon les informations de dispositif du dispositif vidéo radar, si le dispositif vidéo radar est un premier dans les dispositifs vidéo radar ou un non-premier dans les dispositifs vidéo radar pour la surveillance du véhicule en relais ;
si le dispositif vidéo radar est le premier dans les dispositifs vidéo radar pour la surveillance du véhicule en relais, la génération de l'identité de véhicule du véhicule selon les informations de surveillance de véhicule surveillées par le dispositif vidéo radar ;
si le dispositif vidéo radar est le non-premier dans les dispositifs vidéo radar pour la surveillance du véhicule en relais, la demande de l'identité de véhicule du véhicule selon les informations de surveillance de véhicule surveillées par le dispositif vidéo radar,
dans lequel les informations de surveillance de véhicule comprennent des informations de déplacement de véhicule ; les informations de déplacement complètes du véhicule sur la route de déplacement sont déterminées par :
pour chacun de la pluralité de dispositifs vidéo radar, la détermination d'informations de déplacement de véhicule correspondant à chacun de la pluralité de dispositifs vidéo radar selon l'identité de véhicule du véhicule, et l'obtention de multiples morceaux d'informations de déplacement de véhicule ;
la combinaison des multiples morceaux d'informations de déplacement de véhicule selon une séquence de relais de la pluralité de dispositifs vidéo radar surveillant le véhicule en relais, pour obtenir les informations de déplacement complètes du véhicule sur la route de déplacement.

2. Procédé selon la revendication 1, dans lequel les informations de surveillance de véhicule surveillées par le premier dans les dispositifs vidéo radar pour la surveillance du véhicule en relais parmi la pluralité de dispositifs vidéo radar comprennent un numéro de plaque d'immatriculation du véhicule et un temps de surveillance ; des informations de surveillance de véhicule surveillées par le non-premier dans les dispositifs vidéo radar pour la surveillance du véhicule en relais parmi la pluralité de dispositifs vidéo radar comprennent le numéro de plaque d'immatriculation du véhicule ;
si le dispositif vidéo radar est le premier dans les dispositifs vidéo radar pour la surveillance du véhicule en relais, la génération de l'identité de véhicule du véhicule selon les informations de surveillance de véhicule surveillées par le dispositif vidéo radar comprend :
la génération de l'identité de véhicule du véhicule selon le numéro de plaque d'immatriculation et le temps de surveillance ; l'ajout de l'identité de véhicule du véhicule et du numéro de plaque d'immatriculation à une correspondance cible, dans lequel la correspondance cible indique une correspondance entre le numéro de plaque d'immatriculation et l'identité de véhicule ;
si le dispositif vidéo radar est le non-premier dans les dispositifs vidéo radar pour la surveillance du véhicule en relais, la demande de l'identité de véhicule du véhicule selon les informations de surveillance de véhicule surveillées par le dispositif vidéo radar comprend :
l'acquisition, selon le numéro de plaque d'immatriculation, de l'identité de véhicule du véhicule à partir de la correspondance cible.

3. Procédé selon la revendication 1, dans lequel les informations de dispositif du dispositif vidéo radar comprennent l'identité de dispositif du dispositif vidéo radar ;
la détermination, selon les informations de dispositif du dispositif vidéo radar, si le dispositif vidéo radar est le premier dans les dispositifs vidéo radar ou le non-premier dans les dispositifs vidéo radar pour la surveillance du véhicule en relais comprend :
la détermination, selon l'identité de dispositif du dispositif vidéo radar, si le dispositif vidéo radar est le premier dans les dispositifs vidéo radar ou le non-premier dans les dispositifs vidéo radar sur la liaison logique de surveillance par l'intermédiaire de la liaison logique de surveillance stockée, dans lequel la liaison logique de surveillance désigne une liaison pour surveiller les informations de déplacement du véhicule formée par la pluralité des dispositifs vidéo radar.

4. Procédé selon la revendication 2, dans lequel, si le dispositif vidéo radar est le premier dans les dispositifs vidéo radar pour la surveillance du véhicule en relais, l'ajout de l'identité de véhicule du véhicule et du numéro de plaque d'immatriculation à la correspondance cible comprend :
l'ajout des informations de dispositif du dispositif vidéo radar, l'identité de véhicule du véhicule et le numéro de plaque d'immatriculation à une première correspondance cible, dans lequel la première correspondance cible indique une correspondance parmi les informations de dispositif, le numéro de plaque d'immatriculation et l'identité de véhicule ; ou, l'ajout d'une identité de liaison logique de surveillance correspondant au dispositif vidéo radar, l'identité de véhicule et le numéro de plaque d'immatriculation à une seconde correspondance cible, dans lequel la seconde correspondance cible indique une correspondance parmi l'identité de liaison logique de surveillance, le numéro de plaque d'immatriculation et l'identité de véhicule ;
si le dispositif vidéo radar est le non-premier dans les dispositifs vidéo radar pour la surveillance du véhicule en relais, l'acquisition, selon le numéro de plaque d'immatriculation, de l'identité de véhicule du véhicule à partir de la correspondance cible comprend :
la détermination, selon les informations de dispositif du dispositif vidéo radar, d'informations de dispositif du premier dans les dispositifs vidéo radar sur la liaison logique de surveillance par l'intermédiaire de la liaison logique de surveillance, et l'acquisition de l'identité de véhicule du véhicule à partir de la première correspondance cible selon les informations de dispositif du premier dans les dispositifs vidéo radar appareil et du numéro de plaque d'immatriculation ; ou la détermination de l'identité de liaison logique de surveillance correspondant au dispositif vidéo radar selon les informations de dispositif du dispositif vidéo radar, et l'acquisition de l'identité de véhicule du véhicule à partir de la seconde correspondance cible selon l'identité de liaison logique de surveillance correspondant au dispositif vidéo radar et du numéro de plaque d'immatriculation.

5. Procédé selon la revendication 2, dans lequel chacune des identités de véhicule dans la correspondance cible correspond également à des informations de marquage, qui sont de premières informations de marquage ou de secondes informations de marquage, dans lequel les premières informations de marquage indiquent qu'une identité de véhicule correspondante est une identité de véhicule correspondant à chacun des dispositifs vidéo radar qui a été déterminée respectivement pour les messages de signalement d'informations de surveillance de la pluralité de dispositifs vidéo radar, et les secondes informations de marquage indiquent qu'une identité de véhicule correspondante n'a pas été déterminée pour le message de signalement d'informations de surveillance signalé par au moins un de la pluralité de dispositifs vidéo radar ;
les informations de marquage correspondant à une identité de véhicule acquise sont les secondes informations de marquage.

6. Procédé selon la revendication 2, dans lequel les informations de surveillance de véhicule surveillées par la pluralité de dispositifs vidéo radar incluent chacune le numéro de plaque d'immatriculation du véhicule et le temps de surveillance ;
si le dispositif vidéo radar est le premier dans les dispositifs vidéo radar pour la surveillance du véhicule en relais, l'ajout de l'identité de véhicule du véhicule et du numéro de plaque d'immatriculation à la correspondance cible comprend : l'ajout de l'identité de véhicule du véhicule, du numéro de plaque d'immatriculation et du temps de surveillance à la correspondance cible, et la correspondance cible indique une correspondance parmi le numéro de plaque d'immatriculation, le temps de surveillance et l'identité de véhicule ;
si le dispositif vidéo radar est le non-premier dans les dispositifs vidéo radar pour la surveillance du véhicule en relais, l'acquisition, selon le numéro de plaque d'immatriculation, de l'identité de véhicule du véhicule à partir de la correspondance cible comprend :
l'acquisition, selon le numéro de plaque d'immatriculation et le temps de surveillance, de l'identité de véhicule du véhicule à partir de la correspondance cible, dans lequel une différence entre un temps de surveillance dans la correspondance cible correspondant à une identité de véhicule acquise et un temps de surveillance signalé par le dispositif vidéo radar est au sein d'un temps de référence.

7. Appareil (400) de surveillance d'informations de déplacement de véhicule, **caractérisé en ce que** l'appareil comprend :
un module de réception (401) configuré pour recevoir des messages de signalement d'informations de surveillance à partir d'une pluralité de dispositifs vidéo radar, dans lequel un message de signalement d'informations de surveillance de l'un quelconque de la pluralité de dispositifs vidéo radar transporte des informations de dispositif radar du dispositif vidéo radar et des informations de surveillance de véhicule surveillées par le dispositif vidéo radar, et le dispositif vidéo radar est tout dispositif intégré avec une fonction radar et une fonction d'acquisition d'image et déployé sur une route de déplacement d'un véhicule, et la pluralité de dispositifs vidéo radar est utilisée pour surveiller le véhicule en relais ;
un module de détermination (402) configuré pour déterminer, pour le message de signalement d'informations de surveillance d'un quelconque de la pluralité de dispositifs vidéo radar, une identité de véhicule du véhicule selon les informations de dispositif du dispositif vidéo radar et les informations de surveillance de véhicule surveillées par le dispositif vidéo radar ;
le module de détermination (402) est en outre configuré pour déterminer des informations de déplacement complètes du véhicule sur la route de déplacement selon des informations de dispositif de la pluralité de dispositifs vidéo radar, des informations de surveillance de véhicule respectivement surveillées par la pluralité de dispositifs vidéo radar et l'identité de véhicule, ou, le signalement d'informations de dispositif de la pluralité de dispositifs vidéo radar, des informations de surveillance de véhicule respectivement surveillées par la pluralité de dispositifs vidéo radar et l'identité de véhicule afin de déterminer les informations de déplacement complètes du véhicule sur la route de déplacement,
dans lequel les informations de dispositif du dispositif vidéo radar comprennent une identité de dispositif du dispositif vidéo radar ;
le module de détermination (402) est en outre configuré pour :
la détermination de l'identité de véhicule du véhicule selon l'identité de dispositif du dispositif vidéo radar, les informations de surveillance de véhicule surveillées par le dispositif vidéo radar et une liaison logique de surveillance stockée ; dans lequel la liaison logique de surveillance fait référence à une liaison pour la surveillance des informations de déplacement du véhicule formée par la pluralité de dispositifs vidéo radar ;
dans lequel les informations de déplacement complètes du véhicule sur la route de déplacement sont déterminées selon la liaison logique de surveillance enregistrée, des identités de dispositif de la pluralité de dispositifs vidéo radar, des informations de surveillance de véhicule respectivement surveillées par la pluralité de dispositifs vidéo radar et de l'identité de véhicule du véhicule,
dans lequel le module de détermination (402) est en outre configuré pour :
la détermination, selon les informations de dispositif du dispositif vidéo radar, si le dispositif vidéo radar est un premier dans les dispositifs vidéo radar ou un non-premier dans les dispositifs vidéo radar pour la surveillance du véhicule en relais ;
si le dispositif vidéo radar est le premier dans les dispositifs vidéo radar pour la surveillance du véhicule en relais, la génération de l'identité de véhicule du véhicule selon les informations de surveillance de véhicule surveillées par le dispositif vidéo radar ;
si le dispositif vidéo radar est le non-premier dans les dispositifs vidéo radar pour la surveillance du véhicule en relais, la demande de l'identité de véhicule du véhicule selon les informations de surveillance de véhicule surveillées par le dispositif vidéo radar ;
les informations de surveillance de véhicule comprennent des informations de déplacement de véhicule ; le module de détermination est en outre configuré pour déterminer les informations de déplacement complètes du véhicule sur la route de déplacement par :
pour chacun de la pluralité de dispositifs vidéo radar, la détermination d'informations de déplacement de véhicule correspondant à chacun de la pluralité de dispositifs vidéo radar selon l'identité de véhicule du véhicule, et l'obtention de multiples morceaux d'informations de déplacement de véhicule ;
la combinaison des multiples morceaux d'informations de déplacement de véhicule selon une séquence de relais de la pluralité de dispositifs vidéo radar surveillant le véhicule en relais, pour obtenir les informations de déplacement complètes du véhicule sur la route de déplacement.

8. Appareil (400) selon la revendication 7, dans lequel
les informations de surveillance de véhicule surveillées par le premier dans les dispositifs vidéo radar pour la surveillance du véhicule en relais parmi la pluralité de dispositifs vidéo radar comprennent un numéro de plaque d'immatriculation du véhicule et un temps de surveillance ; des informations de surveillance de véhicule surveillées par le non-premier dans les dispositifs vidéo radar pour la surveillance du véhicule en relais parmi la pluralité de dispositifs vidéo radar comprennent le numéro de plaque d'immatriculation du véhicule ;
si le dispositif vidéo radar est le premier dans les dispositifs vidéo radar pour la surveillance du véhicule en relais, le module de détermination est en outre configuré pour : la génération de l'identité de véhicule du véhicule selon le numéro de plaque d'immatriculation et le temps de surveillance ; l'ajout de l'identité de véhicule du véhicule et du numéro de plaque d'immatriculation à une correspondance cible, dans lequel la correspondance cible indique une correspondance entre le numéro de plaque d'immatriculation et l'identité de véhicule ;
si le dispositif vidéo radar est le non-premier dans les dispositifs vidéo radar pour la surveillance du véhicule en relais, le module de détermination est en outre configuré pour :
l'acquisition, selon le numéro de plaque d'immatriculation, de l'identité de véhicule du véhicule à partir de la correspondance cible ;
les informations de dispositif du dispositif vidéo radar incluent l'identité de dispositif du dispositif vidéo radar, le module de détermination est en outre configuré pour :
la détermination, selon l'identité de dispositif du dispositif vidéo radar, si le dispositif vidéo radar est le premier dans les dispositifs vidéo radar ou le non-premier dans les dispositifs vidéo radar sur la liaison logique de surveillance par l'intermédiaire de la liaison logique de surveillance stockée, dans lequel la liaison logique de surveillance désigne une liaison pour surveiller les informations de déplacement du véhicule formée par la pluralité des dispositifs vidéo radar ;
si le dispositif vidéo radar est le premier dans les dispositifs vidéo radar pour la surveillance du véhicule en relais, le module de détermination est en outre configuré pour : l'ajout des informations de dispositif du dispositif vidéo radar, l'identité de véhicule du véhicule et le numéro de plaque d'immatriculation à une première correspondance cible, dans lequel la première correspondance cible indique une correspondance parmi les informations de dispositif, le numéro de plaque d'immatriculation et l'identité de véhicule ; ou, l'ajout d'une identité de liaison logique de surveillance correspondant au dispositif vidéo radar, l'identité de véhicule et le numéro de plaque d'immatriculation à une seconde correspondance cible, dans lequel la seconde correspondance cible indique une correspondance parmi l'identité de liaison logique de surveillance, le numéro de plaque d'immatriculation et l'identité de véhicule ;
si le dispositif vidéo radar est le non-premier dans les dispositifs vidéo radar pour la surveillance du véhicule en relais, le module de détermination (402) est en outre configuré pour :
la détermination, selon les informations de dispositif du dispositif vidéo radar, d'informations de dispositif du premier dans les dispositifs vidéo radar sur la liaison logique de surveillance par l'intermédiaire de la liaison logique de surveillance, et l'acquisition de l'identité de véhicule du véhicule à partir de la première correspondance cible selon les informations de dispositif du premier dans les dispositifs vidéo radar appareil et du numéro de plaque d'immatriculation ; ou la détermination de l'identité de liaison logique de surveillance correspondant au dispositif vidéo radar selon les informations de dispositif du dispositif vidéo radar, et l'acquisition de l'identité de véhicule du véhicule à partir de la seconde correspondance cible selon l'identité de liaison logique de surveillance correspondant au dispositif vidéo radar et du numéro de plaque d'immatriculation ;
chacune des identités de véhicule dans la correspondance cible correspond également à des informations de marquage, qui sont de premières informations de marquage ou de secondes informations de marquage, dans lequel les premières informations de marquage indiquent qu'une identité de véhicule correspondante est une identité de véhicule correspondant à chacun des dispositifs vidéo radar qui a été déterminée respectivement pour les messages de signalement d'informations de surveillance de la pluralité de dispositifs vidéo radar, et les secondes informations de marquage indiquent qu'une identité de véhicule correspondante n'a pas été déterminée pour le message de signalement d'informations de surveillance signalé par au moins un de la pluralité de dispositifs vidéo radar ;
les informations de marquage correspondant à une identité de véhicule acquise sont les secondes informations de marquage ;
les informations de surveillance de véhicule surveillées par la pluralité de dispositifs vidéo radar incluent chacune le numéro de plaque d'immatriculation du véhicule et le temps de surveillance, le module de détermination (402) est en outre configuré pour :
si le dispositif vidéo radar est le premier dans les dispositifs vidéo radar pour la surveillance du véhicule en relais, le module de détermination est configuré pour : l'ajout de l'identité de véhicule du véhicule, du numéro de plaque d'immatriculation et du temps de surveillance à la correspondance cible, et la correspondance cible indique une correspondance parmi le numéro de plaque d'immatriculation, le temps de surveillance et l'identité de véhicule ;
si le dispositif vidéo radar est le non-premier dans les dispositifs vidéo radar pour la surveillance du véhicule en relais, le module de détermination est en outre configuré pour :
l'acquisition, selon le numéro de plaque d'immatriculation et le temps de surveillance, de l'identité de véhicule du véhicule à partir de la correspondance cible, dans lequel une différence entre un temps de surveillance dans la correspondance cible correspondant à une identité de véhicule acquise et un temps de surveillance signalé par le dispositif vidéo radar est au sein d'un temps de référence.

9. Appareil (400) selon la revendication 7, comprenant en outre :
un processeur ;
une mémoire pour stocker des instructions exécutables par un processeur ;
dans lequel le processeur est configuré pour exécuter des étapes du procédé de surveillance d'informations de déplacement de véhicule selon l'une quelconque des revendications 1 à 6.

10. Support de stockage non transitoire lisible par ordinateur, sur lequel sont stockées des instructions qui, lorsqu'elles sont exécutées par un processeur, mettent en œuvre des étapes du procédé de surveillance d'informations de déplacement de véhicule selon l'une quelconque des revendications 1 à 6.

11. Produit de programme informatique, qui contient des instructions qui, lorsqu'elles sont exécutées par un processeur, mettent en œuvre des étapes du procédé de surveillance d'informations de déplacement de véhicule selon l'une quelconque des revendications 1 à 6.
